(19) Europäisches Patentamt / European Patent Office / Office européen des brevets

(11) **EP 4 442 354 A1**

(12) **EUROPÄISCHE PATENTANMELDUNG**

(43) Veröffentlichungstag:
**09.10.2024 Patentblatt 2024/41**

(21) Anmeldenummer: **23166752.8**

(22) Anmeldetag: **05.04.2023**

(51) Internationale Patentklassifikation (IPC):
**B01D 61/42** (2006.01)    **C02F 1/469** (2023.01)
**C02F 1/20** (2023.01)

(52) Gemeinsame Patentklassifikation (CPC):
**C02F 1/4693; B01D 61/44; B01D 61/46;
B01D 61/465;** B01D 61/445; B01D 61/50;
B01D 2311/18; B01D 2311/25; C02F 1/20;
C02F 2201/46115; C02F 2201/46185;
C02F 2209/06; C02F 2209/42

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Evonik Operations GmbH**
**45128 Essen (DE)**

(72) Erfinder:
• **STOCKMEIER, Felix**
**63457 Hanau (DE)**
• **BLANK-SHIM, Silvia**
**63743 Aschaffenburg (DE)**

• **STENNER, Patrik**
**63452 Hanau (DE)**
• **WINKLER, Tobias**
**48249 Dülmen (DE)**
• **STAHL, Rainer**
**59823 Arnsberg (DE)**
• **NTZ, Jörg-Joachim**
**45257 Essen (DE)**

(74) Vertreter: **Evonik Patent Association**
**c/o Evonik Industries AG
IP Management
Bau 1042A/PB 15
Paul-Baumann-Straße 1
45772 Marl (DE)**

(54) **GEWINNEN VON AMMONIAK UND SCHWEFELSÄURE AUS AMMONIUMSULFAT-REICHEN (AB)WÄSSERN**

(57) Die Erfindung befasst sich mit der elektrodialytischen Herstellung von Ammoniak und Schwefelsäure aus Ammoniumsulfat-reichen (Ab)wässern. Ihr liegt die Aufgabe zu Grunde, ein Verfahren zur Rückgewinnung von Ammoniak und Schwefelsäure aus Wässern anzugeben, welche Ammoniumsulfat in hohen Konzentrationen enthält. Das Verfahren soll im industriellen Maßstab praktikabel sein und eine gute Energieeffizienz aufweisen. Gelöst wird dieses Problem durch eine Kombination aus einer Elektrodialyse und einer Wasserelektrolyse. Im Ergebnis wird dabei Ammoniumsulfat in Ammoniak und Schwefelsäure zurückgespalten. Anders als herkömmliche Dreikammer-Verfahren setzt das erfindungsgemäße Verfahren eine Zelle mit lediglich zwei Kompartimenten ein, die jedoch in dem Stack vielfach parallelisiert sein können. Diese Art des Scale-ups ist wesentlich kostengünstiger als die Parallelschaltung mehrerer Zellen.

Fig. 9

**Beschreibung**

Die Erfindung befasst sich mit der elektrodialytischen Herstellung von Ammoniak und Schwefelsäure aus Ammoniumsulfat-reichen (Ab)wässern.

Ammoniumsulfat $(NH_4)_2SO_4$ ist ein in der traditionellen Landwirtschaft und Gartenbau eingesetzter Stickstoff-Dünger. Zu diesem Zweck wird Ammoniumsulfat aber in der Regel nicht gezielt hergestellt, sondern es entsteht meist als Nebenprodukt in großchemischen Prozessen, die Ammonium-Verbindungen als Ausgangsstoff verwenden, wie etwa bei der Herstellung von Caprolactam oder Blausäure. Es liegt dann aber in der Regel nicht in fester Form (als Salz) vor, sondern gelöst in Wasser. Sofern das Wasser neben dem Ammoniumsulfat keine weiteren Produktionsrückstände enthält, wurden die Ammoniumsulfat-haltige Abwässer in der Vergangenheit an die Landwirtschaft verkauft und als Dünger auf den Feldern ausgebracht.

Einen Überblick über die Eigenschaften, Herstellung und Verwendung von Ammoniumsulfat bieten:
Zapp, K.-H., Wostbrock, K.-H., Schäfer, M., Sato, K., Seiter, H., Zwick, W., Creutziger, R. and Leiter, H. (2000). Ammonium Compounds. Section 2: Ammonium Sulfate. In Ullmann's Encyclopedia of Industrial Chemistry, (Ed.). DOI: 10.1002/14356007.a02_243

Weil die zunehmende Überdüngung der Felder zu einem Anstieg von Nitraten im Grundwasser führt, wird das Ausbringen von Stickstoff-Düngern in der Europäischen Union zunehmend reglementiert. Folglich schwindet die Möglichkeit, Ammoniumsulfat-haltige Produktions-Abwässer in der Landwirtschaft zu verwerten.

Da diese Abwässer in Ammonium-verarbeitenden Betrieben aber immer noch anfallen, wird eine Alternative gesucht, diese Abwässer zu verwerten.

Ein Ansatzpunkt dafür ist die Rückgewinnung des im Abwasser enthaltenen Ammoniumsulfats. Die Reaktion von Ammoniak und Schwefelsäure zu Ammoniumsulfat ist nämlich reversibel, sodass es unter Energieaufwand möglich ist, das Ammoniumsulfat zurück in Ammoniak und Schwefelsäure zu verwandeln. Die so zurückgewonnenen Stoffe könnten wieder als Edukte in den chemischen Betrieben eingesetzt werden, welche die Ammoniumsulfat-haltige Abwässer produzieren.

Der Erfindung lag daher die Aufgabe zu Grunde, ein Verfahren zu entwickeln, welches die Rückgewinnung von Ammoniak und Schwefelsäure aus Ammoniumsulfat-haltigen Abwässern im industriellen Maßstab ermöglicht.

Es ist bereits bekannt, dass sich Ammoniumsalze mit den Mitteln der Elektrochemie, genauer gesagt, mit der Elektrodialyse, aus Wasser abtrennen lassen.

Unter Elektrodialyse ist ein Membrantrennverfahren zu verstehen, bei dem die ionischen Bestandteile eines Elektrolyten an mindestens einer selektiv Ionen-leitenden Membran innerhalb eines elektrischen Feldes getrennt werden.

Ionen leitende Membranen gibt es in drei Typen: Anionen leitende Membranen (eng.: anion exchange membrane - AEM), Kationen leitende Membranen (eng.: cation exchange membrane - CEM) und bipolare Membranen (eng.: bipolar membrane - BPM). Eine AEM hat eine bessere Ionenleitfähigkeit für Anionen als für Kationen. Sie ist ionisch positiv geladen. Eine CEM hat eine bessere Ionenleitfähigkeit für Kationen als für Anionen. Sie ist ionisch negativ geladen. Eine BPM weist einen ionisch positiv geladenen Teil und einen ionisch negativ geladenen Teil auf. Eine BPM leitet sowohl Anionen als auch Kationen, aber in unterschiedliche Richtungen. Ihr Zweck besteht darin in die BPM eindiffundierte Wassermoleküle an der Kontaktfläche des ionisch positiv geladenen und des ionisch negativ geladenen Teils bei angelegtem elektrischem Feld in Baseanionen und Säurekationen zu spalten. Durch den Transport dieser Ionen in die angrenzenden Medien wird ein pH-Gradient über die BPM erzeugt. Auf der Seite, welche dem ionisch positiv geladenen Teil zugewandt ist, entsteht ein basisches Milieu mit hohem pH Wert und auf der Seite, welche dem ionisch negativ geladenen Teil zugewandt ist, entsteht ein saures Milieu mit niedrigem pH Wert.

Ionenleitende Membranen bestehen meist aus speziellen fluorierte oder sulfonierte Polymere. Bekannte Beispiele sind Nation® Membranen von DuPont. Es gibt aber auch keramische ionnenleitende Membranen.

Die in der Elektrodialyse eingesetzten elektrochemischen Zellen kombinieren in der Regel mehrere selektiv ionenleitende Membranen unterschiedlicher Typen zu einem Stapel (eng.: Stack). Innerhalb eines Stacks kann dieselbe Abfolge von Membran-Typen - eine so genannte Wiederhohleinheit - vielfach parallelisiert sein.

Abhängig von der Anzahl der in der Zelle getrennt gegenwärtigen Elektrolyten werden Zwei-Kammer-Zellen und Drei-Kammer-Zellen unterschieden. Zwei-Kammer-Zellen arbeiten mit zwei Elektrolyten, währenddessen Drei-Kammerzellen zusätzlich einen dritten Elektrolyt aufweisen.

Eine kurze Einführung in die Elektrodialyse bietet:
Van der Bruggen, B. (2017). Membrane Technology. Section 7.5 Electrodialysis. In Kirk-Othmer Encyclopedia of Chemical Technology, John Wiley & Sons, Inc (Ed.). DOI: 10.1002/0471238961.1305130202011105.a01.pub3

Ein elektrodialytisches Verfahren zur Abtrennung von Ammoniumchlorid aus Wasser ist beispielsweise beschrieben worden in CN104445755B. Die dort offenbarte Methode verwendet bipolare Membranen und erlaubt eine Umwandlung von Ammoniumchlorid, welches in Konzentrationen von bis zu 2 mol/L Ammoniumchlorid in dem Wasser enthalten ist.

Es ist nicht bekannt, inwieweit die in CN104445755B verwendeten Membranen in Ammoniumsulfat resistent sind. Außerdem enthalten relevante Abwässer aus $NH_3$-verarbeiteten Betrieben aber deutlich höhere Konzentrationen von Ammonium, unter anderem bis zu 6 mol/L. Daher müsste das Abwasser zunächst verdünnt werden, bevor es von in dem in CN104445755B beschriebenen Prozess aufgearbeitet werden könnte. Dies erscheint unwirtschaftlich.

Ein kombiniertes elektrolytisches und elektrodialytisches Verfahren zur Abtrennung von Ammoniumnitrat wurde vorgestellt von Gain et al.:

Gain, E., Laborie, S., Viers, P. et al. Ammonium nitrate wastewater treatment by coupled membrane electrolysis and electrodialysis. Journal of Applied Electrochemistry 32, 969-975 (2002). DOI: 10.1023/A:1020908702406

Der frei gesetzte Ammoniak wird durch ein Strippen mit Luft aus dem Elektrolyt entfernt. Die Konzentrationen des Ammoniumnitrats sind auch hier recht niedrig. Darüber befassen sich Gain et al auch mit einem anderen Stoffsystem.

Die Paper von Lv et al. und Li et al. beschreiben jeweils elektrodialytische Batch-Versuche mit Stacks bestehend aus alternierenden Anionenaustauschermembranen und bipolaren Membranen.

Yan Lv, Haiyang Yan, Baojun Yang, Cuiming Wu, Xu Zhang, Xiaolin Wang: Bipolar membrane electrodialysis for the recycling of ammonium chloride wastewater: Membrane selection and process optimization. Chemical Engineering Research and Design, Volume 138, 2018, Pages 105-115, ISSN 0263-8762. DOI 10.1016/j.cherd.2018.08.014.

Ya Li, Shaoyuan Shi, Hongbin Cao, Xinmin Wu, Zhijuan Zhao, Liying Wang: Bipolar membrane electrodialysis for generation of hydrochloric acid and ammonia from simulated ammonium chloride wastewater. Water Research, Volume 89, 2016, Pages 201-209, ISSN 0043-1354, DOI: 10.1016/j.watres.2015.11.038.

Allerdings sind auch hier die Konzentrationen der Ammoniumsalze recht gering und es handelt sich auch nicht um Ammoniumsulfat sondern jeweils um Ammoniumchlorid.

Schließlich sind noch einige Ansätze bekannt geworden, mit Hilfe von Dreikammer-Zellen Ammonium elektrodialytisch anzureichern, so zum Beispiel aus JP2011224445A, aus CN102515317A und aus US 2021/0069645 A. Die Drei-Kammer-Zellen umfassen einen Stack aus bipolarer Membran, Anionenaustauschermembran, Kationenaustauschermembran und bipolarer Membran. Sie bilden somit drei Kompartimente, ein erstes, saures zwischen bipolarer Membran und Anionenaustauschermembran, ein zweites zentral zwischen Anionenaustauschermembran und Kationenaustauschermembran und ein drittes, basisches Kompartiment zwischen Kationenaustauschermembran und bipolarer Membran. In dem meisten Systemen werden zudem die Kammern, welche sich direkt an den Elektroden befinden, mit einem gesonderten Elektrolyten, der Elektrodenspüllösung durchspült. Der Feed wird im zentralen Kompartiment zwischen Anionenaustauschermembran und Kationenaustauschermembran entsalzt. Im sauren Kompartiment entsteht Säure, währenddessen im basischen Kompartiment Ammonium angereichert wird.

Nachteil der Drei-Kammer-Zellen gegenüber Zwei-Kammer-Zellen ist, dass diese aufgrund des komplexen Aufbaus ihres Stacks einen recht hohen elektrischen Innenwiderstand aufweisen und deswegen prinzipbedingt höhere Spannungen benötigen, um dieselbe Stoffmenge aufzutrennen wie eine Zwei-Kammer-Zelle. Der elektrische Energiebedarf einer Drei-Kammer-Zelle ist daher höher als der einer Zwei-Kammer-Zelle bei gleicher Trennleistung.

Des Weiteren ergeben sich bei dem Einsatz eines Feeds mit hoher Konzentration der zu trennenden Stoffe höhere Konzentrationsgradienten in einem Dreikammer-Zellenaufbau gegenüber einem Zweikammer-Zellenaufbaus. Daraus resultiert in einem Dreikammer-Zellenaufbau ein starker Wasserübergang von einem Kompartiment mit niedriger Konzentration in ein angrenzendes mit höherer Konzentration als weitere verfahrenstechnische Herausforderung.

Das Abtrennen von Ammoniumsulfat aus Abwässern mit Hilfe von Elektrodialyse wurde beschrieben von Yang et al.:

Yang, H., Zhang, X.-.-S. and Yuan, W.-.-K. (2008), Effect ofOperating Parameters on the Condensation of Ammonium Sulfate by Electrodialysis. Chem. Eng. Technol., 31: 1261-1264. https://doi.org/10.1002/ceat.200700461

Bei dem rückgewonnenen Zielprodukt handelte es sich um Ammoniumsulfat.

Die DE 2727409 C2 offenbart die Elektrodialyse von Ammoniumsulfat zu Ammoniak und Schwefelsäure mit Hilfe einer Drei-Kammer-Zelle, welche einen Stack umfassend eine Anionenaustauschermembran und eine Kationenaustauschermembran aufweist. In den Beispielen wird eine 6%-ige $(NH_4)_2SO_4$-Lösung in die Zelle gepumpt. Das entspricht etwa 0.45 mol/l. Die Nachteile dieses Verfahrens sind die allgemein für Drei-Kammer-Zellen vorerörterten. Des Weiteren erscheint ein Scale-up des Aufbaus für größere (Ab-)Wassermengenströme, nur über eine Vergrößerung der Membran- und Elektrodenfläche oder eine Parallelschaltung vieler baugleicher Module möglich.

Auch Luo et al beschrieben eine Elektrodialyse von Ammoniumsulfat zu Ammoniak und Schwefelsäure mit Hilfe einer Drei-Kammer-Zelle, welche einen Stack umfassend eine erste bipolare Membran, eine Anionenaustauschermembran, eine Kationenaustauschermembran und eine zweite bipolare Membran aufweist:

LUO Mingrui, ZHANG Zeqiang, ZHANG Hanquan, LI Donglian, HE Dongsheng.: Influence factors of decomposing ammonium sulfate by bipolar membrane electrodialysis Chemical Minerals and Processing. 2015,44(11) DOI: 10.16283/j.cnki.hgkwyjg.2015.11.007

LUO et al. untersuchten die Zersetzung von Ammoniumsulfat mit einer Stoffkonzentration bis zu 1.061 mol/l.

Die Herstellung von Schwefelsäure aus Ammoniumsulfat mit Hilfe einer Zweikammerzelle mit einem Stack umfassend eine erste bipolare Membran, eine Anionenaustauschermembran und eine zweite bipolare Membran wurde beschreiben von Gao.:

GAO Li-hua, Study on Sulfuric acid Production from Ammonium sulfate by Bipolar Membrane Electrodialysis, HEBEi HUAGONG, Vol 35, No. 6, June 2012.

Bei diesem Verfahren wurde allerdings kein Ammoniak produziert.

Ein elektrodialytisches Verfahren zur Abtrennung von Ammoniak aus Wasser wurde von van Linden et al. umfangreich untersucht:

Niels van Linden, Henri Spanjers, Jules B. van Lier: Application of dynamic current density for increased concentration factors and reduced energy consumption for concentrating ammonium by electrodialysis. Water Research, Volume 163, 2019,114856, ISSN 0043-1354, DOI: 10.1016/j.watres.2019.114856.

Eine Besonderheit in der elektrochemischen Behandlung von Ammoniumhaltigen Abwässern liegt darin, dass das durch pH-Verschiebung gebildete Ammoniak als ungeladenes, in dem Wasser gelöstes Molekül vorliegt. Als ungeladenes, kleines Molekül kann Ammoniak mit Wasser geschwollene Ionenaustauschermembranen passieren und diffundiert auf Grund von Konzentrationsgradienten in die Elektrolyten der anderen Kammern. Die diffundierende Menge an Ammoniak ist hierbei von der Verweilzeit abhängig.

In einem sauren Milieu verschiebt sich das Dissoziationsgleichgewicht wieder auf die Seite des Ammoniums, welches durch seine Ladung nur Kationenaustauschermembranen passieren kann. Dieser Zusammenhang macht es erforderlich, dass das in der Elektrodialyse entstehende Zielprodukt Ammoniak nach kurzmöglichster Verweilzeit aus dem basischen Elektrolyten abgetrennt wird.

Des Weiteren besitzt Ammoniak eine sehr gute Löslichkeit (531 g/L bei 20°C) in Wasser wodurch hohe Konzentrationen ohne spontanes Ausgasen erreicht werden können. Hieraus verstärkt sich die Notwendigkeit einer, der Elektrodialyse nachgeschalteten, möglichst schnellen Abtrennung.

Im Lichte dieses Standes der Technik lag der Erfindung die Aufgabe zu Grunde, ein Verfahren zur Rückgewinnung von Ammoniak und Schwefelsäure aus Wässern anzugeben, welche Ammoniumsulfat in hohen Konzentrationen enthält. Das Verfahren soll im industriellen Maßstab praktikabel sein und eine gute Energieeffizienz aufweisen.

Gelöst wird diese Aufgabe durch ein Verfahren mit den folgenden, nicht chronologischen Schritten:

a) Bereitstellen von mindestens einer elektrochemischen Zelle mit den folgenden Merkmalen:

i) die elektrochemische Zelle umfasst eine anodische Elektrodenkammer, in der eine Anode angeordnet ist;
ii) die elektrochemische Zelle umfasst eine kathodische Elektrodenkammer, in der eine Kathode angeordnet ist;
iii) die elektrochemische Zelle umfasst einen Stack mit dem folgenden Aufbau:

- der Stack weist eine Anzahl $n$ Wiederholeinheiten auf, wobei es sich bei $n$ um eine natürliche Zahl handelt;
- der Stack weist eine Anzahl $n$ primäre Kompartimente auf;
- der Stack weist eine Anzahl $n$ sekundäre Kompartimente auf;
- der Stack weist eine Anzahl s Separatoren auf, wobei sich s wie folgt berechnet: $s = 2*n-1;$
- die primären und sekundären Kompartimente sind alternierend in dem Stack angeordnet und jeweils durch einen Separator voneinander getrennt;
- bei jedem Separator handelt es sich entweder um eine Anionen leitende Membran oder um eine bipolare Membran;
- die Anzahl a der Separatoren, bei denen es sich um eine Anionen leitende Membran handelt, bestimmt sich wie folgt:
  $a$=1 wenn $n$=1 und $a = n$-1 wenn $n$ > 1;
- die Anzahl b der Separatoren, bei denen es sich um eine bipolare Membran handelt, bestimmt sich wie folgt:
  $b$=0 wenn $n$=1 und $b = n$ wenn $n$ > 1;
- wenn n > 1 sind die Separatoren, bei denen es sich um eine Anionen leitende Membran handelt und die Separatoren, bei denen es sich um eine bipolare Membran handelt, alternierend innerhalb des Stacks angeordnet;
- jedes primäres Kompartiment ist anodenseitig einer benachbarten bipolaren Membran angeordnet, wobei die benachbarte bipolare Membran nicht Bestandteil des Stacks sein muss;
- jedes sekundäres Kompartiment ist kathodenseitig einer benachbarten bipolaren Membran angeordnet, wobei die benachbarte bipolare Membran nicht Bestandteil des Stacks sein muss;

iv) die elektrochemische Zelle umfasst zwei Endmembranen, wobei die erste Endmembran zwischen dem Stack und anodischen Elektrodenkammer angeordnet ist, wobei die zweite Endmembran zwischen dem Stack und der kathodischen Elektrodenkammer angeordnet ist, und wobei beide Endmembranen identisch ausgewählt sind aus der Gruppe bestehend aus den folgenden Membrantypen: Anionen leitende Membran, Kationen leitende Membranen, bipolare Membran;

vii) jede bipolare Membran ist jeweils so in der elektrochemischen Zelle angeordnet, dass ihr positiv geladener Teil in Richtung der Anode orientiert ist, währenddessen ihr negativ geladener Teil in Richtung der Kathode orientiert ist;

b) Bereitstellen einer elektrischen Spannungsquelle;

c) Bereitstellen eines Ammoniumsulfat-reichen Wassers enthaltend Wasser und Ammoniumsulfat;

d) Bereitstellen eines sauren Elektrolyts enthaltend Wasser und Schwefelsäure;

e) Bereitstellen einer Elektrodenspüllösung enthaltend Wasser, Schwefelsäure und/oder Ammoniumsulfat;

f) Beaufschlagen der primären Kompartimente der elektrochemischen Zelle mit dem Ammoniumsulfat-reichen Wasser;

g) Beaufschlagen der sekundären Kompartimente der elektrochemischen Zelle mit dem sauren Elektrolyt;

h) Spülen der Elektrodenkammern mit Elektrodenspüllösung;

i) Beaufschlagen der elektrochemischen Zelle mit einer von der elektrischen Spannungsquelle bezogenen elektrischen Spannung, dergestalt, dass zwischen der Anode und der Kathode ein elektrisches Potential herrscht;

j) Abführen von Ammoniakwasser aus den primären Kompartimenten der elektrochemischen Zelle;

k) Abführen von wässriger Schwefelsäure aus den sekundären Kompartimenten der elektrochemischen Zelle;

l) Abtrennen von Ammoniak aus dem Ammoniakwasser wobei ein Ammoniak-armes Wasser erhalten wird.

Ein solches Verfahren ist Gegenstand der Erfindung.

Das erfindungsgemäße Verfahren ist eine Kombination aus einer Elektrodialyse und einer Wasserelektrolyse. Im Ergebnis wird dabei Ammoniumsulfat in Ammoniak und Schwefelsäure zurückgespalten.

Anders als herkömmliche Dreikammer-Verfahren setzt das erfindungsgemäße Verfahren eine Zelle mit lediglich zwei Kompartimenten ein, die jedoch in dem Stack vielfach parallelisiert sein können. Diese Art des Scale-ups ist wesentlich kostengünstiger als die Parallelschaltung mehrerer Zellen. Außerdem erlaubt der erfindungsgemäße Aufbau der Zelle eine kurze Verweildauer des Ammoniums in der Zelle, sodass dem Ammonium nicht genug Zeit bleibt, durch die Membranen in andere Kompartimente oder die Elektrodenkammern zurückzudiffundieren. Auch ermöglicht das erfindungsgemäße Setup eine schnelle Abtrennung des Ammoniaks.

Durch den besonderen Stackaufbau können auch sehr stark Ammoniumsulfat-haltige Wässer verarbeitet werden, die in der Produktion von Ammonium-basierten Chemikalien im Weltmaßstab anfallen.

Vorzugsweise weist die elektrochemische Zelle genau eine anodische Elektrodenkammer, genau eine kathodische Elektrodenkammer, genau einen Stack und genau zwei Endmembranen aufweist, und dass die erste Endmembran unmittelbar an Stack und anodischer Elektrodenkamme angrenzt und dass die zweite Endmembran unmittelbar an Stack und kathodischer Elektrodenkammer angrenzt. Durch den Verzicht auf weitere Elemente wird der Zellaufbau sehr effektiv.

Insbesondere besteht der Stack aus den oben aufgezählten Kompartimenten und Separatoren. Dies bedeutet, der Stack umfasst keine weiteren Elemente als die oben aufgezählten.

Gleichwohl können die Kompartimente oder die Elektrodenkammern von einem Spacer aufgespannt sein. Ein Spacer ist ein Platzhalter, der den freien Raum in den Kompartimente oder in den Elektrodenkammern offen hält. Da der Spacer keinen elektrochemischen Effekt hat, ist er kein gesondertes Element des Stacks. Ein Spacer ist vielmehr als Teil der Elektrodenkammer oder der Kompartimente aufzufassen.

Vorzugsweise erfolgt das scale-up per Erhöhung der Wiederholeinheiten im Stack. Zusätzlich ist auch ein numbering-up denkbar. Dementsprechend umfasst eine Anlage zur Durchführung des Verfahrens eine Vielzahl elektrochemischer Zellen, die parallel mit der elektrischen Spannungsquelle verschaltet sind.

Der im Prozess gebildete Ammoniak wird mit dem Ammoniakwasser aus der Zelle abgeführt. Das Abtrennen des Ammoniak-Gases aus dem flüssigen Ammoniakwasser erfolgt vorzugsweise durch Strippen mit Luft oder Stickstoff.

Gemäß einer besonders bevorzugten Ausführungsform der Erfindung wird der Ammoniak bei reduziertem Druck oder Vakuum, also bei einem Druck zwischen 0 hPa und 1013 hPa aus dem Ammoniakwasser abgetrennt. Bei dem verringerten Druck entweicht der Ammoniak fast von allein, sodass weniger Strippgas benötigt wird. Gleichwohl ist es auch möglich, bei reduziertem Druck mit Strippgas zu strippen. Dadurch wird nicht so ein starkes Vakuum benötigt.

Das Verfahren vorzugsweise durchgeführt in einem der Betriebsmodi batch, semi-batch, feed-and-bleed, single-pass.

Im Betriebsmodus "batch" wird das Ammoniumsulfat-reiche Wasser in einem primären Vorlagebehälter bereit gestellt, und dass das Ammoniak-arme Wasser in den primären Vorlagebehälter verbracht; und/oder dass der saure Elektrolyt wird in einem sekundären Vorlagebehälter bereit gestellt, und dass die wässrige Schwefelsäure wird in den sekundären Vorlagebehälter verbracht. Das batch-Verfahren ist besonders einfach durchzuführen. Wirtschaftlicher ist jedoch das semi-batch-Verfahren, bei dem länger effektive Betriebszustände ausgenutzt werden. Dabei wird das Ammoniumsulfat-reiche Wasser in einem primären Vorlagebehälter bereit gestellt, dass das Ammoniak-arme Wasser in den primären Vorlagebehälter verbracht, und zeitweise wird ein Teil des Inhalts des primären Vorlagebehälters entnommen und mit frischem Ammoniumsulfat-reichen Wasser ersetzt; und/oder der saure Elektrolyt wird in einem sekundären Vorlagebehälter bereit gestellt, die wässrige Schwefelsäure in den sekundären Vorlagebehälter verbracht, und zeitweise wird ein Teil des Inhalts des sekundären Vorlagebehälters entnommen und mit frischem sauren Elektrolyt oder Wasser ersetzt.

Besonders bevorzugter Betriebsmodus ist "feed-and-bleed", welcher dadurch gekennzeichnet, ist dass das Ammoniumsulfat-reiche Wasser in einem primären Vorlagebehälter bereit gestellt wird, dass das Ammoniak-arme Wasser in den primären Vorlagebehälter verbracht wird, und dass kontinuierlich ein Teil des Inhalts des primären Vorlagebehälters entnommen und mit frischem Ammoniumsulfat-reichen Wasser ersetzt wird;

und/oder dass kontinuierlich ein Teil des Ammoniak-armen Wassers vor Verbringung in den primären Vorlagebehälter entnommen und mit frischem Ammoniumsulfat-reichen Wasser ersetzt wird;

und/oder dass der saure Elektrolyt in einem sekundären Vorlagebehälter bereit gestellt wird, dass die wässrige Schwefelsäure in den sekundären Vorlagebehälter verbracht wird, und dass kontinuierlich ein Teil des Inhalts des sekundären Vorlagebehälters entnommen und mit frischem sauren Elektrolyt oder Wasser ersetzt wird und/oder dass kontinuierlich ein Teil der wässrigen Schwefelsäure vor Verbringung in den primären Vorlagebehälter entnommen und mit frischem sauren Elektrolyt oder Wasser ersetzt wird.

Anstelle die Kreislauforientierten Betriebsverfahren batch, semi-batch und fleed-and-bleed kann auch ein kreislaufloses Setup gefahren werden, welches hier single-pass genannt wird. Dieses ist dadurch gekennzeichnet, dass kontinuierlich frisches Ammoniumsulfat-reiches Wasser bereit gestellt und kontinuierlich Ammoniak-armes Wasser ausgeschleust wird; und/oder dass kontinuierlich frischer saurer Elektrolyt bereit gestellt und kontinuierlich wässrige Schwefelsäure ausgeschleust wird.

Vorzugsweise handelt es sich bei dem frischen Ammonium-sulfat reichen Wasser um ein Wasser, was Ammoniumsulfat in einer Konzentration zwischen 25 und 75 Gew.-% enthält, bezogen auf die Masse des frischen Ammoniumsulfat-reichen Wassers, wobei der per Glaselektrode bei 20°C gemessene pH-Wert des frischen Ammoniumsulfat-reichen Wassers zwischen 5 und 9 liegt. Dies sind typische Werte von Ammoniumsulfat-haltigen Abwässern aus der Chemieproduktion. Besonders bevorzugt liegt die Ammoniumsulfat-Konzentration des frischen Ammonium-sulfat reichen Wassers zwischen 30 und 40 Gew.-%.

30 Gew.-% entspricht 2.27 mol/L. 40 Gew.-% entspricht 3.03 mol/L. Die molaren Konzentrationen der in Lösung vorliegenden Ammoniumionen ist dann jeweils doppelt so hoch. (Aus 1 mol/L $(NH_4)_2SO_4$ entstehen 2 mol/L $NH_4^+$.).

Bei der Betriebsweise "Single-Pass" wird das frische Ammoniumsulfat-haltige Wasser direkt in die Zelle gefahren. Im Batch-Betrieb ist das nur anfangs der Fall; im Laufe des Batch-Betriebs sinkt die Konzentration von Ammoniumsulfat im Ammoniumsulfat-reichen Wasser, das in die Zelle gefahren wird. Im Semi-batch-Betrieb wird nach gewissen Zeitabständen die Konzentration von Ammonium-Sulfat im Ammoniumsulfat-reichen Wasser wieder erhöht durch den Austausch eines Teil des Inhalts des primären Vorlagebehälters. Im "Fleed-and-bleed" Verfahren wird kontinuierlich frisches Ammoniumsulfat-haltiges Wasser nachdosiert, sodass der Gehalt von Ammoniumsulfat im Ammoniumsulfat-reichen Wasser weitestgehend konstant ist.

Vorzugsweise wird die Elektrodenspüllösung zirkuliert. Dafür wird die Elektrodenspüllösung in einem Spültank bereitgestellt wird, und die Elektrodenspüllösung kontinuierlich aus dem Spültank in die beiden Elektrodenkammern und von dort wieder zurück in den Spültank gefahren.

Ganz besonders bevorzugt wird die Elektrodenspüllösung nacheinander durch die eine Elektrodenkammer und danach durch die andere Elektrodenkammer geführt.

Da der pH Wert der Elektrodenspüllösung konstant sein sollte, wird die Elektrodenspüllösung hinsichtlich ihres pH-Wertes vorzugsweise kontinuierlich überwacht, wobei im Falle einer Überschreitung eines Soll-pH-Wertes Wasser und/oder Schwefelsäure bzw. im Falle einer Unterschreitung eines Soll-pH-Wertes Wasser und/oder Ammoniumsulfat zudosiert wird.

Ebenso sollte die Umlaufmenge der Elektrodenspüllösung konstant sein. Um dies sicherzustellen, sollte der Spültank hinsichtlich seines Füllstandes kontinuierlich überwacht werden, wobei im Falle einer Überschreitung eines Soll-Füllstandes Elektrolytspüllösung abgelassen bzw. im Falle einer Unterschreitung eines Soll-Füllstandes Wasser und/oder Schwefelsäure und/oder Ammoniumsulfat zudosiert wird.

In analoger Weise sollten auch die Vorlagebehälter hinsichtlich ihres Füllstandes kontinuierlich überwacht werden, wobei im Falle einer Überschreitung eines Soll-Füllstandes Ammoniumsulfat-reiches Wasser bzw. saurer Elektrolyt abgelassen bzw. im Falle einer Unterschreitung eines Soll-Füllstandes Wasser und/oder Schwefelsäure und/oder Ammoniumsulfat zudosiert wird.

Weitere bevorzugte Ausführungsformen der Erfindung ergeben sich aus der Figurenbeschreibung und den Beispielen.

Der prinzipielle Aufbau der im erfindungsgemäßen Prozess eingesetzten elektrochemischen Zelle 0 soll nun anhand der Figuren beschrieben werden. Dafür zeigen diese schematisch:

Fig. 1:     Elektrochemische Zelle, Grundaufbau;

Fig. 2:     Bipolare Membran in Explosionsdarstellung;

Fig. 3.1:   Stack mit einer Wiederholeinheit in Explosionsdarstellung;

Fig. 3.2:   Stack mit zwei Wiederholeinheiten in Explosionsdarstellung;

Fig. 3.3:   Stack mit drei Wiederholeinheiten in Explosionsdarstellung;

Fig. 4:     Elektrochemische Zelle, mit Medien beaufschlagt;

Fig. 5:     Betriebsmodus "Batch";

Fig. 6:     Betriebsmodus "semi-Batch";

Fig. 7:     Betriebsmodus "feed-and-bleed";

Fig. 8:     Betriebsmodus "single-pass";

Fig. 9:     Elektrochemische Vorgänge in der Zelle.

Die elektrochemische Zelle 0 umfasst zwei Elektrodenkammern 1, 2 nämlich eine anodische Elektrodenkammer 1 und eine kathodische Elektrodenkammer 2. In der anodischen Elektrodenkammer 1 ist eine Anode 3 angeordnet, in der kathodischen Elektrodenkammer 2 befindet sich eine Kathode 4. In den beiden Elektrodenkammern 1, 2 kann sich neben der jeweiligen Elektrode 3, 4 noch ein Spacer befinden (nicht gezeichnet). Ein Spacer ist ein Platzhalter, der den Raum der Elektrodenkammer aufspannt, beziehungsweise offen hält. Der Spacer ermöglicht den Durchfluss von Elektrodenspüllösung durch die Elektrodenkammern 1, 2. Dazu später mehr. Der Spacer kann als poröse oder verwobene Struktur ausgeführt sein.

Zwischen den beiden Elektrodenkammern 1, 2 ist ein Stack 5 angeordnet, der im Folgenden näher beschrieben werden wird. Der Stack 5 grenzt jedoch nicht direkt an die beiden Elektrodenkammern 1, 2 an, sondern zwischen dem Stack 5 und den beiden Elektrodenkammern 1, 2 ist jeweils eine Endmembran 6, 7 angeordnet. Zwischen der anodischen Elektrodenkammer 1 und dem Stack 5 befindet sich eine anodische Endmembran 6; zwischen der kathodischen Elektrodenkammer 2 und dem Stack 5 ist eine kathodische Endmembran 7 angeordnet.

Bei den beiden Endmembranen 6, 7 handelt es sich entweder um eine Anionenaustauschermembran AEM, eine Kationenaustauschermembran CEM oder um eine bipolare Membran BPM. Wichtig ist, dass beide Endmembranen 6, 7 stets denselben Membrantyp aufweisen. So kann es sich etwa bei der anodischen Endmembran 6 und bei der kathodischen Endmembran 7 jeweils um eine AEM handeln, jeweils eine CEM oder jeweils um eine BPM. Die Wahl des für beide Endmembranen übereinstimmenden Membrantyps ist grundsätzlich frei. Nur für den Fall, dass der Stack nur eine einzige Wiederholeinheit aufweist, muss es sich bei beiden Endmembranen 6,7 jeweils um eine bipolare Membran BPM handeln.

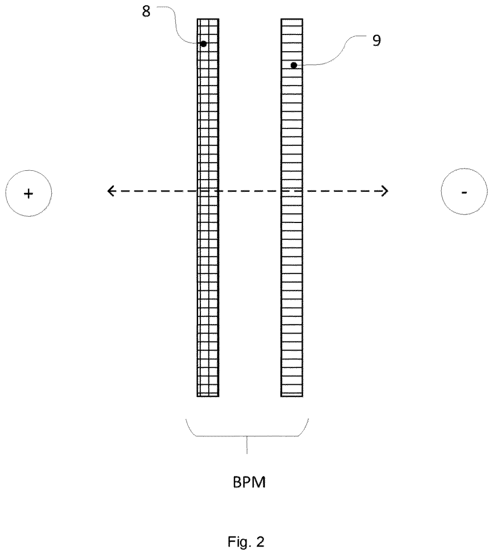

Figur 2 zeigt den Aufbau einer bipolaren Membran BPM in Explosionsdarstellung. Bei einer bipolaren Membran BPM handelt es sich um ein Laminat aus einer positiv geladenen Ionenaustauschermembran 8 und einer negativ geladenen Ionenaustauschermembran 9. Die jeweilige Ladung der Ionenaustauschermembranen 8, 9 wird durch eine Protonierung bzw. Deprotonierung des Polymers erreicht, aus der die jeweilige Ionenaustauschermembranen 8, 9 hergestellt sind.

Die beiden Ionenaustauschermembranen 8, 9 grenzen innerhalb der bipolaren Membran BPM direkt aneinander. Der in Figur 2 ersichtliche Abstand ist der Explosionsdarstellung geschuldet. Die Ausrichtung der bipolaren Membran BPM innerhalb der Stacks 5 bzw. der elektrochemischen Zelle 0 ist dergestalt, dass die positiv geladene Ionenaustauschermembran 8 in Richtung der Anode 3 ausgerichtet ist, währenddessen die negativ geladene Ionenaustauschermembran 9 zur Kathode 4 orientiert ist.

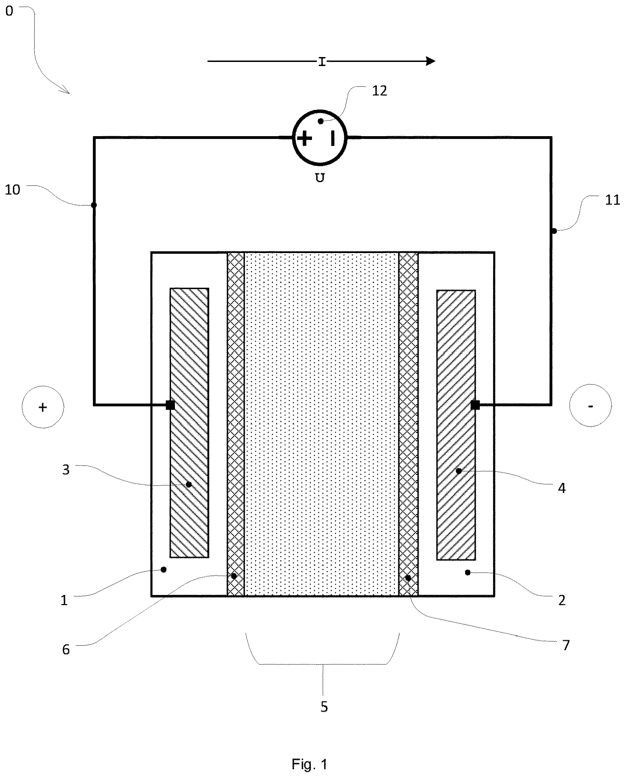

Hinsichtlich des in Figur 1 dargestellten Grundaufbaus der elektrochemischen Zelle 0 bleibt noch zu erwähnen, dass die beiden Elektroden 3, 4 über eine erste elektrische Leitung 10 bzw. über eine zweite elektrische Leitung 11 mit einer elektrischen Spannungsquelle 12 verbunden sind, sodass die Zelle 0 mit einer von der elektrischen Spannungsquelle 12 bezogenen elektrischen Spannung $U$ beaufschlagt werden kann. Dann wirkt ein entsprechendes elektrisches Potential zwischen Anode 3 und Kathode 4. Die elektrische Spannungsquelle 12 ist so verschaltet, dass die Anode 3 als Pluspol (+) wirkt, währenddessen die Kathode 4 den Minuspol (-) bildet. Im Betrieb fließt über die beiden Leitungen 10, 11 und die Spannungsquelle 12 ein elektrischer Strom $I$. Da der Stack 5 elektrisch isoliert, gibt es keinen elektrischen Kurzschluss zwischen den Elektroden 2, 3.

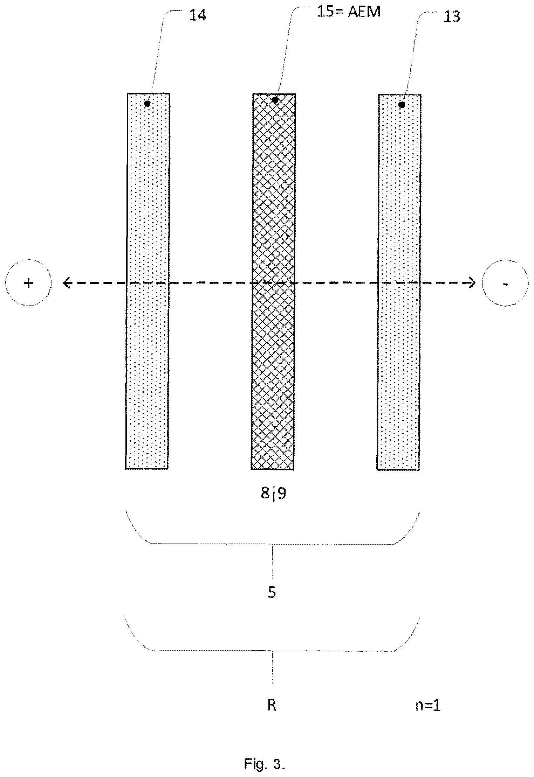

Figur 3.1 zeigt den einfachsten Aufbau des Stacks 5 in Explosionsdarstellung. In seinem einfachsten Aufbau enthält der Stack 5 nur eine einzige Wiederholeinheit R. Eine Wiederholeinheit ist eine Abfolge von Elementen innerhalb des Stacks, die mehrfach wiederholt sein kann. Die Abfolge der Elemente einer Wiederholeinheit R ist erfindungsgemäß wie folgt:

Kompartiment - Separator - Kompartiment

Durch Aneinanderreihung vom mehreren identisch aufgebauten Wiederholeinheiten entsteht der Stack. Dabei ist jedes Elements des Stacks Bestandteil von genau einer Wiederholeinheit. Die Anzahl der Wiederholeinheiten, welche den Stack bilden, wird $n$ genannt. $n$ ist eine natürliche Zahl. Da Null keine natürliche Zahl ist, ist $n$ nie Null. Der Stack weist daher immer mindestens eine Wiederholeinheit auf.

In der in Figur 3.1 dargestellten, einfachsten Form des Stacks 5 beträgt die Anzahl $n$ der Wiederholeinheiten lediglich eins ($n$=1). Das bedeutet, der in Figur 3.1 gezeigte Stack 5 besteht aus genau einer Wiederholeinheit R.

Die Wiederholeinheit umfasst die folgenden Elemente: ein primäres Kompartiment 13, ein sekundäres Kompartiment 14 und ein Separator 15. Der Separator 15 ist zwischen den beiden Kompartimenten 13, 14 angeordnet und grenzt beide Kompartimente 13, 14 voneinander ab.

Bei den beiden Kompartimenten 13, 14 handelt es sich um Räume, die zur Aufnahme von fließfähigen Medien dienen. Dazu später mehr. Jedes Kompartiment 13, 14 kann von einem Spacer (nicht dargestellt) gefüllt sein, der den Raum des jeweiligen Kompartiments 13, 14 aufspannt bzw. offen hält. Bei dem Spacer handelt es sich beispielsweise um eine poröse oder verwobene Struktur, die mit einem fließfähigen Medium geflutet werden kann. Die Verwendung von Spacern erleichtert das Stapeln des Stacks 5 unter Beibehaltung definierter Volumina der Kompartimente 13, 14.

Der zwischen den beiden Kompartimenten 13, 14 angeordnete Separator 15 muss elektrisch isolierend sein und gleichzeitig ionisch leiten. Konkret handelt es sich bei dem Separator 15 um eine ionenleitende Membran aus einem elektrisch isolierenden Material. Wichtig ist, dass der Membrantyp des Separators 5 nicht willkürlich gewählt werden kann. Bei der in der in Figur 3.1 gezeigten, einfachsten Ausführungsform des Stacks 5 mit $n$=1 handelt es sich bei dem Separator 15 um eine Anionenaustauschermembran AEM.

Das erfindungsgemäße Zelldesign sieht vor, dass das primäre Kompartiment 13 immer anodenseitig von einer bipolare Membran BPM angeordnet sein muss, währenddessen das sekundäre Kompartiment 14 immer kathodenseitig einer bipolare Membran BPM anzuordnen ist. Weil der Stack für n=1 keine BPM enthält, ist es erforderlich, beide Endmembranen als BPM auszuführen. Demnach ist die Abfolge des Stacks 5 für $n$=1 in Richtung der Anode (in Figur 3.1 nach links) wie folgt: primäres Kompartiment 13 - Separator 15 - sekundäres Kompartiment 14.

Für den Fall, dass der Stack mehr als eine Wiederholeinheit aufweist ($n$>1), muss der Separator innerhalb des Stacks alternierend ausgewählt sein zwischen einer Anionenaustauschermembran AEM und einer bipolaren Membran BPM. Zwischen zwei benachbarten Wiederholeinheiten ist ebenfalls ein Separator anzuordnen. Die Wiederholeinheiten folgen also nicht unmittelbar aufeinander, sondern sind durch einen als AEM ausgeführten Separator getrennt. Die Wahl der Endmembranen ist dann frei.

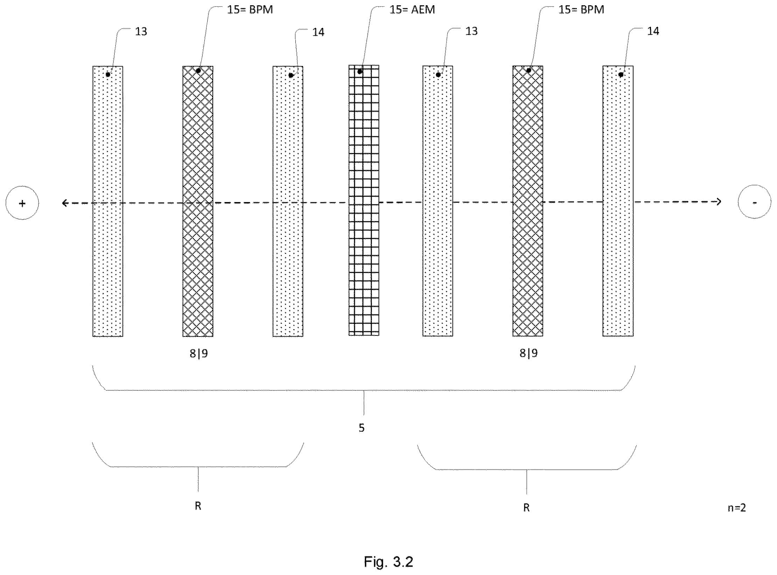

Der Stackaufbau mit genau zwei Wiederholeinheiten R ($n$=2) ist in Figur 3.2 gezeigt. Er lautet in Richtung Kathode (in der Figur 3.2 nach rechts):

Primäres Kompartiment 13 - Separator 15 als bipolare Membran BPM - sekundäres Kompartiment 14 - Separator 15 als Anionenaustauschermembran AEM - primäres Kompartiment 13 - Separator 15 als bipolare Membran BPM - sekundäres Kompartiment 14.

Für $n$=2 umfasst der Stack 5 folglich genau zwei primäre Kompartimente 13 und genau zwei sekundäre Kompartimente 14. Die Anzahl $k$ aller Kompartimente (anodisch und kathodisch) entspricht beim erfindungsgemäßen Zelldesign der doppelten Anzahl $n$ der Wiederholeinheiten (Gleichung 1):

$$k = 2 * n \qquad\qquad \text{(Gl. 1)}$$

Darüber hinaus umfasst der Stack 5 für $n$=2 drei Separatoren 15, von denen zwei als BPM ausgeführt sind und einer als AEM. Bei dem Separator 15 handelt es sich also abwechselnd um eine bipolare Membran bzw. um eine Anionenaustauschermembran.

Bei einem erfindungsgemäßen Stackaufbau bestimmt sich die die Anzahl a der als AEM ausgeführten Separatoren aus der Anzahl $n$ der Wiederholeinheiten nach Gleichung 2 wie folgt:

$$a := \begin{cases} 1, n = 1 \\ n - 1, n > 1 \end{cases} \qquad \text{(Gl. 2)}$$

Bei einem erfindungsgemäßen Stackaufbau bestimmt sich die die Anzahl b der als BPM ausgeführten Separatoren aus der Anzahl $n$ der Wiederholeinheiten nach Gleichung 3 wie folgt:

$$b := \begin{cases} 0, n = 1 \\ n, n > 1 \end{cases} \qquad \text{(Gl. 3)}$$

Aus den Gleichungen 2 und 3 folgt unmittelbar die Gesamtzahl $s$ der Separatoren im Stack nach Gleichung 4:

$$s = 2 * n - 1 \qquad \text{(Gl. 4)}$$

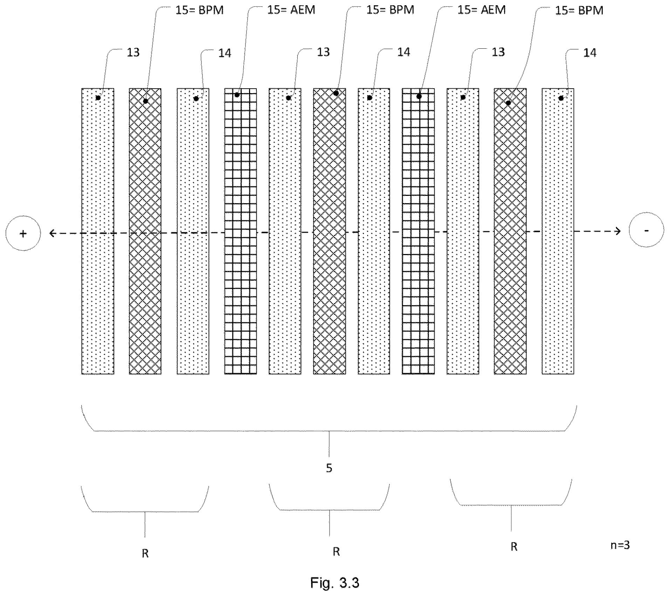

Figur 3.3 zeigt den Aufbau eines Stacks 5 mit $n$=3.

Die Anzahl der Kompartimente $k$ Anionenaustauschermembranen a, bipolare Membranen b und Separatoren s in Abhängigkeit der Anzahl $n$ der Wiederholeinheiten fasst Tabelle 1 zusammen:

Tabelle 1: Werte für $k$, $s$, a und b für n<8

| Wiederholeinheiten | Kompartimente | Separatoren | AEM | BPM |
|---|---|---|---|---|
| *n* | *k* | *s* | *a* | *b* |
| 1 | 2 | 1 | 1 | 0 |
| 2 | 4 | 3 | 1 | 2 |
| 3 | 6 | 5 | 2 | 3 |
| 4 | 8 | 7 | 3 | 4 |
| 5 | 10 | 9 | 4 | 5 |
| 6 | 12 | 11 | 5 | 6 |
| 7 | 14 | 13 | 6 | 7 |

Die Anzahl n der Wiederholeinheiten R innerhalb eines Stacks kann theoretisch beliebig groß werden. Mit der Anzahl der Wiederholeinheiten steigt die elektrochemisch aktiv genutzte Fläche der Zelle, sodass sie mehr Durchsatz erlaubt. Da der Innenwiderstand der Zelle mit der Anzahl der verbauten Separatoren jedoch steigt, sinkt die elektrische Effizienz des Prozesses. Folglich gibt es ein betriebswirtschaftliches Optimum für die Anzahl der Wiederholeinheiten. Dieses hängt konkret von dem spezifischen Widerstand der Separatoren und auch vom den Kosten des Membranmaterials ab.

So kann eine im erfindungsgemäßen Verfahren eingesetzte elektrochemische Zelle genauso gut 10 Wiederholeinheiten aufweisen wie 100.

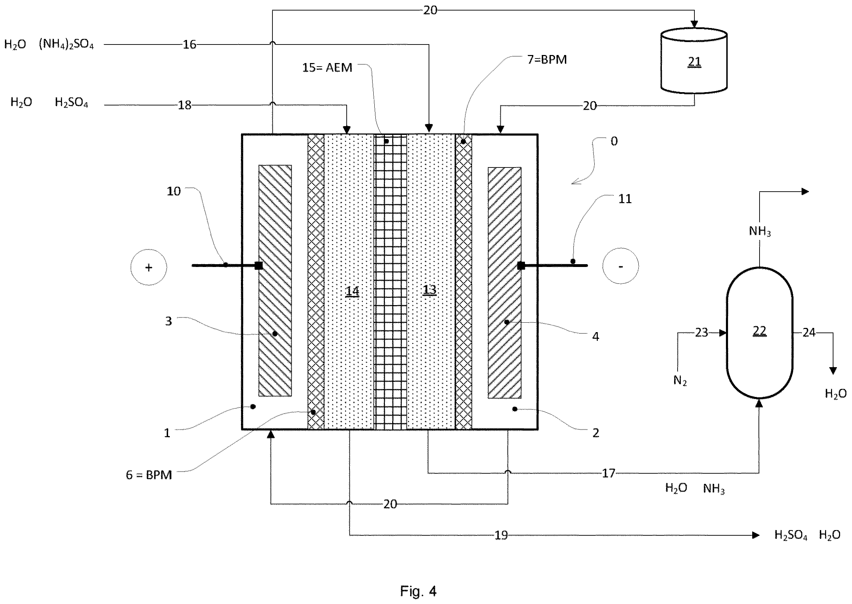

Anhand der Figur 4 wird nun erläutert, mit welchen Medien die elektrochemische Zelle 0 arbeitet.

Ein Ammoniumsulfat-reiche Wasser 16 stellt den eigentlichen Ausgangstoff (Feed) für die in der elektrochemischen Zelle 0 durchgeführte Elektrodialyse dar. Es enthält Wasser $H_2O$ und Ammoniumsulfat $(NH_4)_2SO_4$. Das Ammoniumsulfat-reiche Wasser 16 wird in das primäre Kompartiment 13 der Zelle 0 gefahren. Wenn der Stack der elektrochemischen Zelle 0 mehr als eine Wiederholeinheit aufweist (n>1), umfasst die Zelle auch entsprechend $n$ primäre Kompartimente. Das Ammoniumsulfat-reiche Wasser 16 wird in alle vorhandenen primären Kompartimente 13 gefahren.

In dem ersten Kompartiment 13 wird das Ammoniumsulfat-reiche Wasser 16 in Ammoniakwasser 17 umgesetzt. Das Ammoniakwasser 17 enthält Wasser HzO, neu gebildeter Ammoniak $NH_3$, wobei der Ammoniak teilweise dissoziiert als NH4$^+$ vorliegt. Gegebenenfalls enthält das Ammoniakwasser auch nicht umgesetztes Ammoniumsulfat $(NH_4)_2SO_4$ (nicht dargestellt). Die Konzentration von etwaigen im Ammoniakwasser 17 enthaltenen Ammoniumsulfat ist geringer als im Ammoniumsulfat-reichen Wasser 16. Aufgrund des Austausches von Sulfat- durch Hydroxidionen ist das Ammoniakwasser 17 basisch. Sein pH Wert ist höher als der des Ammoniumsulfat-reiche Wasser 16. Der pH-Wert des Ammoniakwassers 17 liegt zwischen 9 und 14. Das Ammoniakwasser 17 stellt ein Zwischenprodukt des Prozesses dar und wird aus dem primären Kompartiment 13 abgezogen.

Ein sauer Elektrolyt 18 stellt ein Hilfsmedium zur Abfuhr der im Prozess gebildeten Schwefelsäure dar. Der saue Elektrolyt 18 enthält Wasser $H_2O$ und Schwefelsäure $H_2SO_4$ und/oder Ammoniumsulfat $(NH_4)_2SO_4$. Der saue Elektrolyt 18 wird in das sekundäre Kompartiment 14 gefahren, bzw. in alle sekundären Kompartimente 14, falls der Stack mehrere Wiederholeinheiten aufweist. Der saure Elektrolyt 18 enthält bereits beim Eintritt in das sekundäre Kompartiment 14 Schwefelsäure und/oder Ammoniumsulfat, um ionisch leitfähig zu sein.

Im sekundären Kompartiment 14 wird im sauren Elektrolyt 18 zusätzlich Schwefelsäure $H_2SO_4$ gebildet, sodass der saure Elektrolyt 18 zu wässriger Schwefelsäure 19 umgesetzt wird. Die Konzentration von Schwefelsäure $H_2SO_4$ in derwässrigen Schwefelsäure 19 ist höher als im sauren Elektrolyt 18. Der pH Wert der wässrigen Schwefelsäure 19 ist dementsprechend höher als der pH Wert des sauren Elektrolyts 18. Die wässrige Schwefelsäure 19 wird aus dem sekundären Kompartiment 14 abgezogen. Abhängig von der erzielten Konzentration der Schwefelsäure in der wässrigen Schwefelsäure 19 kann diese direkt als sekundäres Zielprodukt verwendet werden oder wird noch weiter aufkonzentriert, wie später beschrieben.

Bei der Elektrodenspüllösung 20 handelt es sich ebenfalls um ein Hilfsmedium, was zur Bereitstellung des Reaktionseduktes Wasser an den Elektroden 3, 4 und gleichzeitig als Elektrolyt genutzt wird. Sie enthält Wasser und Schwefelsäure und/oder Ammoniumsulfat. Die Elektrodenspüllösung wird in beide Elektrodenkammern 1, 2 gefahren, um dort mit den Elektroden 3, 4 in Kontakt zu kommen. Die Elektrodenspüllösung 20 wird insbesondere aus einem entsprechenden Tank 21 entnommen und durch beide Elektrodenkammern 1, 2 zirkuliert, wahlweise seriell oder parallel (nicht gezeichnet).

Um an das primäre Zielprodukt, den Ammoniak zu gelangen, wird das Ammoniakwasser 17 in einem Stripper 22 verbracht und dort mit einem Strippgas 23, z.B. mit Stickstoff $N_2$ oder Luft (nicht gezeichnet) beaufschlagt. Mit dem Strippgas 23 wird gasförmiger Ammoniak $NH_3$ aus dem Ammoniakwasser 17 ausgetragen, sodass ein Ammoniak-armes Wasser 24 zurück bleibt. Der Strippingprozess kann wahlweise auch unter Vakuum, also bei einem Druck unter 1013 hPa erfolgen.

Der erfindungsgemäße Prozess lässt vier Betriebsmodi zu, nämlich batch, semi-batch, feed-and-bleed und single-pass.

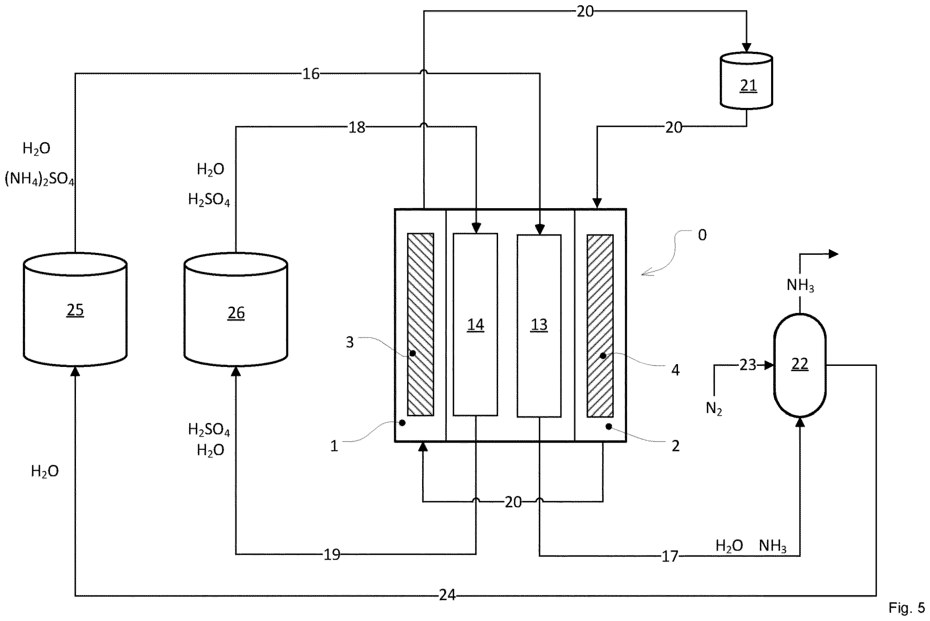

In Figur 5 ist das Prinzip "batch" dargestellt. Dabei wird das Ammoniumsulfat -reiche Wasser 16 in einem primären Vorlagebehälter 25 bereit gestellt und von dort in das primäre Kompartiment 13 der elektrochemischen Zelle 0 gefahren. Das aus dem primären Kompartiment 13 abgezogene Ammoniakwasser 17 wird im Stripper 22 vom Ammoniak befreit, sodass das Ammonium-sulfatarme Wasser 24 zurück bleibt. Dieses wird aber zurück in den primären Vorlagebehälter 25 gefahren und dort mit dem ursprünglich bereitgestellten Ammoniumsulfat -reiche Wasser vermischt. Dadurch nimmt die Konzentration von Ammoniumsulfat im Ammoniumsulfat -reichen Wasser 16 mit der Zeit immer mehr ab. Auch der pH Wert des Ammoniumsulfat -reiche Wasser 16 ändert sich ständig, weil das Medium im Kreis durch das primäre Kompartiment 13, den Stripper 22 und den primären Vorlagebehälter 25 gefahren wird.

Im batch-Betrieb startet die Zusammensetzung des Ammoniumsulfat-reichen Wassers 16 bei etwa 30-40 wt.% $((NH_4)_2SO_4$, bezogen auf das Gesamtgewicht des Ammoniumsulfat-reichen Wassers. Der pH-Wert liegt zu Anfang zwischen 5 und 9. Im Prozessverlauf verschiebt sich die Zusammensetzung zu: $(NH_4)_2SO_4$, $NH_3$, HzO, $9 < pH < 14$ mit einem möglichst hohen Anteil an $NH_3$ bezogen auf den restlichen Anteil an $NH_4^+$ bestimmt durch das Dissoziationsgleichgewicht beider Stoffe. Die pH Werte verstehen sich auf eine Messung bei 20°C bezogen, vorgenommen mit einer Glaselektrode, die mit einer geeigneten Prüfflüssigkeit geeicht wurde.

Bei dem in Figur 5 dargestellte batch-Betrieb wird auch der saure Elektrolyt bzw. die wässrige Schwefelsäure im Kreis gefahren. Dafür wird der saure Elektrolyt 18 in einem sekundären Vorlagebehälter 26 bereit gestellt und von dort in das sekundäre Kompartiment 14 gefahren. Die daraus abgezogene, wässrige Schwefelsäure 19 wird zurück in den sekundären Vorlagebehälter 26 gefahren. Dadurch nimmt die Konzentration an Schwefelsäure im sauren Elektrolyt 18 im Laufe des Prozesses ständig zu, der pH-Wert ebenfalls.

Der Startwert für den sauren Elektrolyten 18 liegt bei etwa einer Konzentration von 1 Vol.-% $H_2SO_4$ und/oder 0 bis 50 g/L$(NH_4)_2SO_4$, bezogen auf das Volumen des sauren Elektrolyten. Im Prozessverlauf verschiebt sich die Zusammensetzung zu: $(NH_4)_2SO_4$, $H_2SO_4$ 5 bis 20 Vol.-%, HzO, $0 < pH < 7$.

Nach einer gewissen Laufzeit wurde so viel Ammoniak in dem Prozess gebildet und ausgeschleust, dass die Konzentration von Ammoniumsulfat im primären Vorlagebehälter 25 so gering ist, dass sich der Prozess nicht mehr wirtschaftlich betreiben ließe. Dann wird der Batch-Prozess beendet. Im sekundären Vorlagebehälter 26 findet sich die konzentrierte Schwefelsäure, neben dem Ammoniak das zweite Zielprodukt des Prozesses.

Statt den Batch-Prozess mit der maximalen Konzentration des Ammoniumsulfat -reichen Wassers 16 zu beaufschlagen, ist es möglich, nach einer gewissen Laufzeit ein Teil des Inhalts des primären Vorlagebehälters 25 gegen frisches Ammoniumsulfat-reiches Wasser 27 auszutauschen und so ein Ammoniak-reiches Wasser 16 mit einer, sich aus dem Mischungsverhältnis ergebende, Konzentration zu erhalten. Das in die Zelle gefahrene Ammoniak-reiche Wasser 16 hat somit maximal die Ammoniumsulfat-Konzentration des frisches Ammoniumsulfat-reiches Wassers 27. Bis zur Nachdosierung von frischem Ammoniumsulfat-reichen Wasser 27 sinkt die Konzentration von Ammoniumsulfat im Ammoniumsulfat-reichen Wasser 16.

Analog kann nach einer gewissen Laufzeit ein Teil des Inhalts des sekundären Vorlagebehälters 26 (konzentrierte Schwefelsäure $H_2SO_4$) entnommen und durch frisches Wasser 28 ersetzt werden. So wird der pH Wert des sauren Elektrolyts 18 wieder gesteigert.

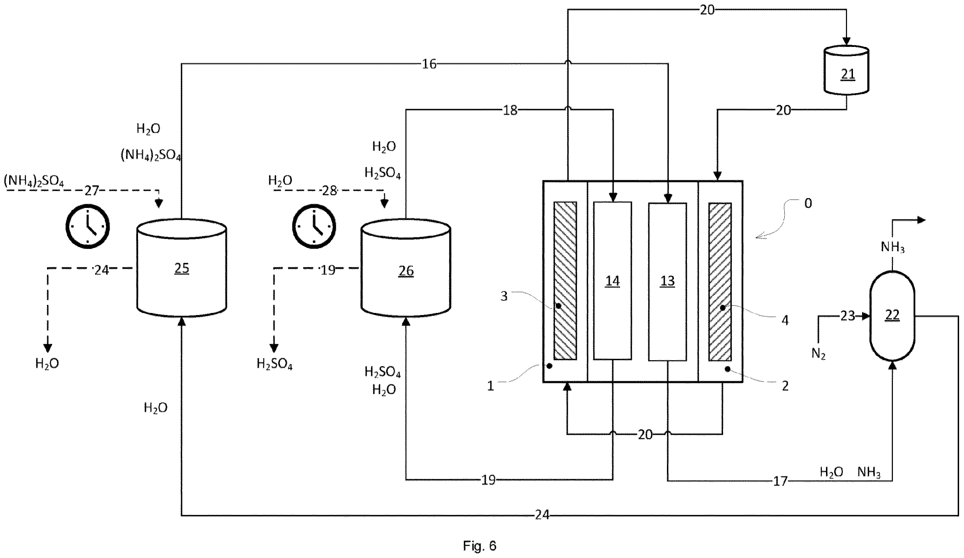

Diese Verfahrensweise mit den teilweise ausgetauschten Inhalten der Vorlagebehälter 25, 26 wird semi-batch genannt und ist in Figur 6 skizziert.

Im semi-batch-Betrieb wird das selbe Ammonium-reiche Wasser 16 wie im batch-Prozess eingesetzt, jedoch werden durch den Austausch der Medien weniger extreme Anfangs- und/oder Endkonzentration erreicht. So kann beispielsweise der Inhalt des primären Vorlagebehälters bei : $(NH_4)_2SO_4$, $NH_3$, HzO, 9 < pH < 14 teilweise ausgetauscht werden, der sekundäre Vorlagebehälter wird bei $NH_4)_2SO_4$, $H_2SO_4$, HzO, 0 < pH < 7 mit Wasser verdünnt.

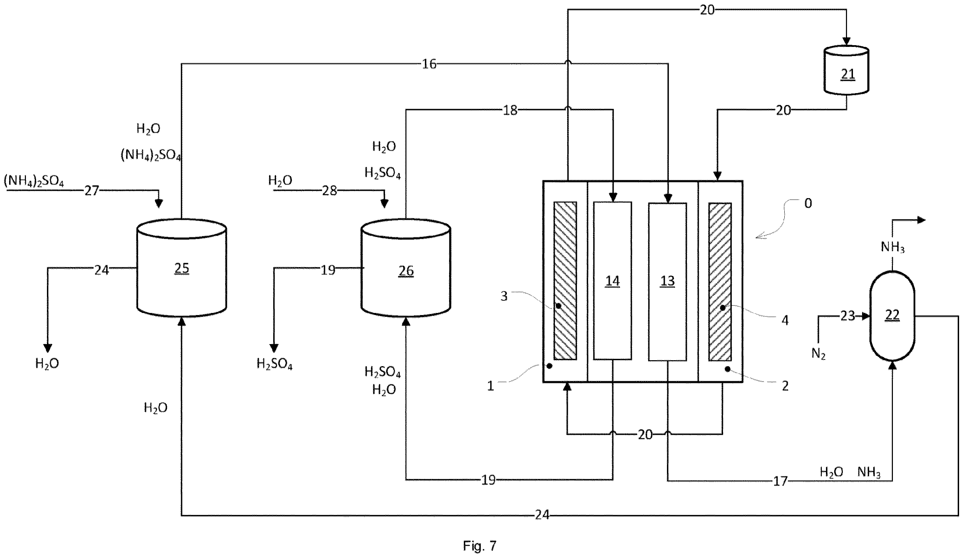

Eine bevorzugte Ausführungsform der Erfindung sieht es vor, dass kontinuierlich frisches Ammoniumsulfat-reiches Wasser 27 in den primären Vorlagebehälter 25 gefahren wird, währenddessen kontinuierlich Ammoniumsulfat-armes Wasser 24 aus dem Prozess ausgeschleust wird. So entsteht, wie zuvor, ein Ammoniak-reiches Wasser 16 mit einer, sich aus dem Mischungsverhältnis ergebenden, Konzentration. Analog wird kontinuierlich wässrige Schwefelsäure 19 aus dem Prozess entnommen und frisches Wasser 28 in den primären Vorlagebehälter 26 nachdosiert. Ziel dabei ist es, die pH Werte in beiden Vorlagen in einem engen Fenster konstant zu halten. Diese Betriebsweise wird feed-and-bleed genannt. Sie ist in Figur 7 skizziert.

Die Konzentrationen werden im feed-an-bleed-Betrieb wie folgt gewählt:
Im primären Vorlagebehälter 25 wird eine Zusammensetzung von: $(NH_4)_2SO_4$ zwischen 0 wt.% und 40 wt.%, 5.5 < pH < 14 eingestellt. Die Konzentration an $NH_3$ wir durch kontinuierliches Entfernen möglichst gering gehalten. Das aus dem primären Kompartiment 13 entnommene Ammoniakwasser 17 liegt dann mit der folgenden Zusammensetzung vor: Restanteil $(NH_4)_2SO_4$ zwischen 0 wt.% und 10 wt.%, und mit einem möglichst hohen Anteil an $NH_3$ bezogen auf den restlichen Anteil an $NH_4^+$ bestimmt durch das Dissoziationsgleichgewicht beider Stoffe bei 9.5 < pH < 14.

Im sekundären Vorlagebehälter 26 wird im feed-and-bleed-Betrieb wird ein konstanter Betriebspunkt durch die Zugabe von frischem Wasser 28 und dem Abführen von prozessiertem 'Bleed', nämlich wässrige Schwefelsäure 19 eingestellt. Hierbei wird im sekundären Vorlagebehälter 26 ein Gemisch aus Wasser, Ammoniaksulfat und Schwefelsäure bei einem pH zwischen 0 und 7 eingestellt. Genaue Konzentrationsangaben sind hierbei nicht sinnvoll, denn Die Konzentrationen hängen von der Verdünnung durch das zugegebene Wasser ab. Am Ausgang des sekundären Kompartiment 14 liegt folgende Zusammensetzung vor: $H_2SO_4$ zwischen 0-20 Vol.-%, HzO, pH zwischen 0 und 7.

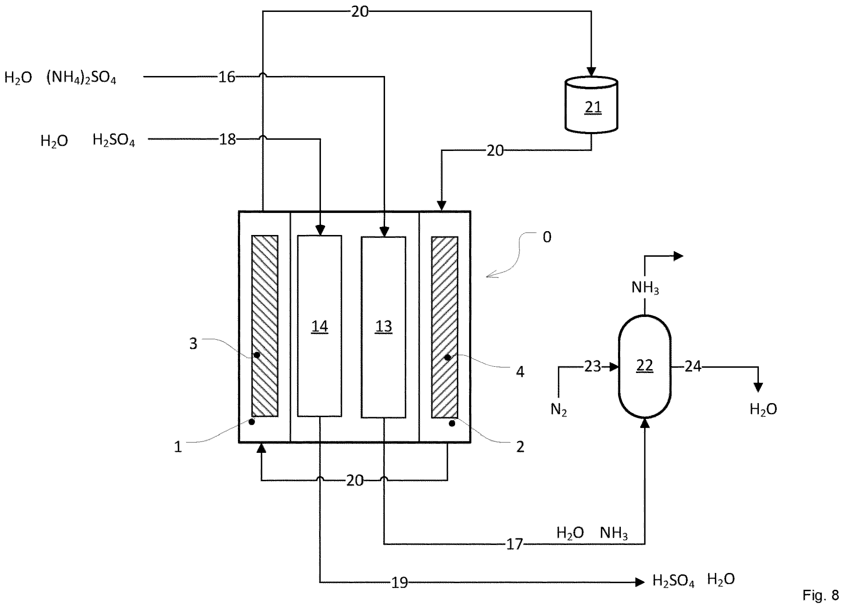

Anstelle der Kreislaufführung durch die beiden Kompartimente 13,14 in den Betriebsmodi batch, semi-batch und feed-and-bleed, ist es auch möglich die jeweiligen Medien in einem Zug (ohne Rückführung) durch die Kompartimente zu schleusen. Diese Betriebsweise wird single-pass genannt und ist in Figur 8 dargestellt.

Die Konzentrationen werden im single-pass-Betrieb wie folgt gewählt:
Im single-pass-Betrieb wird direkt Ammoniumsulfat-reiches Wasser 16 in das primäre Kompartiment 13 der Zelle 0 gefahren. Die Konzentration von $((NH_4)_2SO_4$, liegt dann zwischen 25 und 75 Gew.-% oder zwischen 30 Gew.-% und 40 Gew.-%. Der pH zwischen 5 und 9. Am Ausgang des ersten Kompartiment 13 wird Ammoniakwasser 17 mit der folgenden Zusammensetzung abgezogen: $(NH_4)_2SO_4$ zwischen 0 Gew.-% und 10 Gew.-%, und mit einem möglichst hohen Anteil an $NH_3$ bezogen auf den restlichen Anteil an $NH_4^+$ bestimmt durch das Dissoziationsgleichgewicht beider Stoffe bei einem pH zwischen 9 und14.

Beim single-pass-Verfahren liegt die Zusammensetzung des sauren Elektrolyten 18 bei etwa einer Konzentration von 1 Vol.-% $H_2SO_4$ und/oder 0-50 g/L$(NH_4)_2SO_4$, bezogen auf das Volumen des sauren Elektrolyten. Die aus dem sekundären Kompartiment 14 abgezogene wässrige Schwefelsäure hat im single-pass-Verfahren einen pH zwischen 0 und 7 und eine Konzentration von $H_2SO_4$ zu 5 bis 20 Vol.-%.

Selbstverständlich ist es möglich, die hier vorgestellten Betriebsmodi zu mischen, etwa das erste Kompartiment im Kreislauf mit feed-and-bleed zu fahren und das sekundäre Kompartiment im single-pass zu durchlaufen.

Allen Betriebsmodi ist gemein, dass die Elektrodenspüllösung 20 im Kreislauf durch den Tank und die beiden Elektrodenkammern 1, 2 gefahren wird. Der Grund dafür ist, dass sich die Zusammensetzung der Elektrodenspüllösung 20 kaum ändert. Sie enthält Wasser, Schwefelsäure und/oder Ammoniumsulfat, wobei der per Glaselektrode bei 20°C gemessene pH-Wert der Elektrodenspüllösung zwischen 0 und 9 liegt.

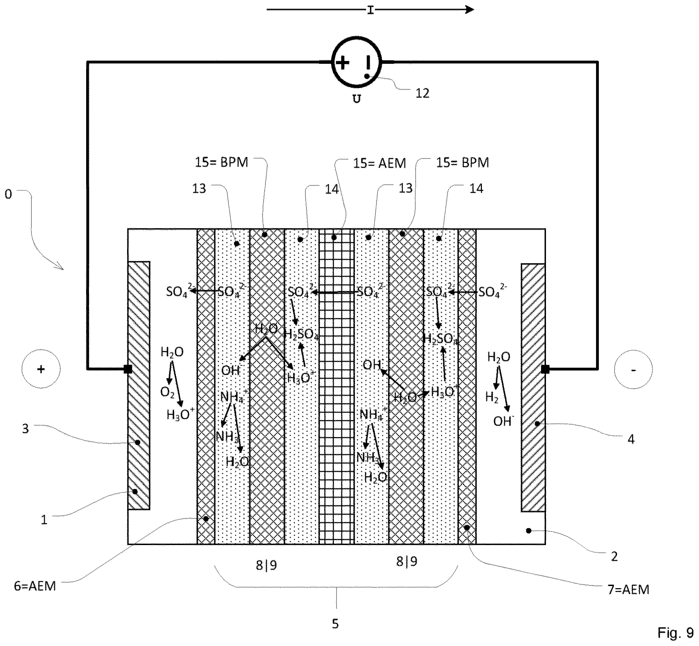

Abschließend sollen noch auf die elektrochemischen Vorgänge erläutert werden, welche gemäß der gängigen Modellvorstellungen in der Zelle 0 erwartet werden. Hierzu wird Figur 9 herangezogen.

Die in Figur 9 dargestellte elektrochemische Zelle 0 weist zwei Wiederholeinheiten R auf, n=2. Beide Endmembranen 6, 7 sind als Anionenaustauschermembran AEM ausgeführt. Bei dem Separator 15 handelt es sich ebenfalls um eine AEM. Der Stack 5 der in Figur 9 dargestellten Zelle 0 entspricht somit dem in Figur 3.2 gezeigtem.

Weil der Prozess mit wässrigen Medien arbeitet, befindet sich in allen Kompartimenten 13, 14 und Elektrodenkammern 1,2 Wasser HzO.

In den ersten Kompartimenten 13 befindet sich zusätzlich Ammoniumsulfat $(NH_4)_2SO_4$, welches mit dem Ammoniumsulfat-reichen Wasser 16 in die primären Kompartimente 13 eingetragen wurde. Da das Ammoniumsulfat in dem Wasser gelöst ist, liegt es entsprechend in Form seines Ammonium-Kations $NH4^+$ und seines Sulfat-Anions $SO_4^{2-}$

vor.

In den zweiten Kompartimenten 14 befindet sich neben Wasser zusätzlich Schwefelsäure $H_2SO_4$, welche mit dem sauren Elektrolyt 18 in die sekundären Kompartimente 14 eingetragen wurde. Da die Schwefelsäure in dem Wasser dissoziiert, liegt sie entsprechend in Form ihres Oxonium-Kations $H_3O^+$ und ihres Sulfat-Anions $SO_4^{2-}$ vor.

Da in der Elektrodenspüllösung 20 neben Wasser sowohl Ammoniumsulfat, als auch Schwefelsäure enthalten sein kann, können sich die vorgenannten Ionen ebenfalls in beiden Elektrodenkammern 1, 2 befinden.

Weil die elektrochemische Zelle 0 mit einer von der elektrischen Spannungsquelle (hier nicht dargestellt) bezogenen elektrischen Spannung U beaufschlagt wird, wirkt zwischen Anode und Kathode ein entsprechendes elektrisches Potential. Dieses bewirkt, dass die Anionen in Richtung der Anode 3 wandern, währenddessen es die Kationen zur Kathode 4 zieht. Die Sulfat-Anionen $SO_4^{2-}$ können dabei die Anionenaustauschermembranen AEM überwinden. Da die bipolaren Membranen BPM aber so angeordnet sind, dass ihre negativ geladene Ionenaustauschermembran 9 in Richtung der Kathode 4 weist, werden die Sulfat-Anionen $SO_4^{2-}$ von der BPM zurückgestoßen. Im Ergebnis reichern sich die Sulfat-Anionen $SO_4^{2-}$ kathodenseitig der bipolaren Membranen BPM, also in den sekundären Kompartimenten 14 an. In analoger Weise können die Ammonium-Kationen $NH_4^+$ die bipolaren Membranen BPM nicht in Richtung der Kathode 4 überwinden und reichern sich in den primären Kompartimenten 13 an. Der Vorgang der Anreicherung bestimmter Anionen und Kationen in dedizierten Kompartimenten wird als Elektrodialyse bezeichnet.

Im erfindungsgemäßen Verfahren findet parallel zur Elektrodialyse noch eine Elektrolyse von Wasser $H_2O$ statt und zwar in Oxonium-Kation $H_3O^+$ und Hydroxid-Anionen $OH^-$. Die Wasserelektrolyse teilt sich auf in eine Anodenreaktion (I) und eine Kathodenreaktion (II), die in den jeweiligen Elektrodenkammern erfolgt:

$$6\ H_2O \rightarrow O_2 + 4\ H_3O^+ + 4\ e^- \qquad (I)$$

$$2\ H_2O + 2\ e^- \rightarrow H_2 + 2\ OH^- \qquad (II)$$

Die Elektrolyse von Wasser gemäß den beiden Teilreaktionen (I) und (II) ist die Variante der Wasserelektrolyse in neutraler Lösung. Wenn in der anodische Elektrodenkammer 1 bzw. der anodischen Elektrodenkammer 2 zunehmend acide Bedingungen herrschen, kann auch die Variante der Wasserspaltung in saurer Lösung stattfinden (nicht dargestellt). Wenn zum Start des Prozesses die Elektrodenspüllösung 20 basisch ist, kann es auch zu einer basische Wasserspaltung kommen (nicht dargestellt).

Die in der Wasserspaltung gebildeten Gase Wasserstoff $H_2$ und Sauerstoff $O_2$ werden aus der Elektrodenspüllösung 20 abgetrennt und können wahlweise in anderen Prozessen stofflich genutzt oder in einer Brennstoffzelle verstromt werden. Mit dem gewonnenen Strom kann die elektrische Spannungsquelle unterstützt werden. Das Abtrennen der Gase ist einfach, da diese mehr oder weniger von allein aus der Elektrodenspüllösung herausblubbern. Wichtig ist nur, Sauerstoff und Wasserstoff getrennt abzutrennen, damit es nicht zu einer Knallgasexplosion kommt. Dies alles ist hier nicht im Einzelnen dargestellt, da die aktive Fläche des Stacks viel größer ist als die der Elektrodenkammern. Die elektrochemischen Effekte in dem Stack dominieren die in den Elektrodenkammern deutlich. Im Ergebnis wird viel mehr Ammoniak und Schwefelsäure gebildet als Wasserstoff und Sauerstoff.

Relevanter ist eine zweite Wasserspaltung, welche innerhalb der bipolaren Membranen BPM stattfindet. Wie bereits erwähnt, nehmen die Materialien, aus denen bipolaren Membranen bestehen, Wasser auf, sodass im elektrischen Potential auf der Grenzfläche der BPM ebenfalls Wasser zu $OH^-$ und $H_3O^+$ gespalten wird. Aufgrund der Polarität der BPM wandern die entstehenden Hydroxidionen $OH^-$ in die primären Kompartimente 13, die anodenseitig der BPM angeordnet sind, währenddessen die Oxonium-Kation $H_3O^+$ in die sekundären Kompartimente 14 auf der Kathodenseite der BPM wandern.

In dem primären Kompartiment 13 bilden die Hydroxidionen $OH^-$ mit den dort gegenwärtigen Ammonium-Kations $NH4^+$ unter Wasserabspaltung den Ammoniak $NH_3$ gemäß Gleichgewichtsreaktion (IV):

$$NH_4^+ + OH^- \leftrightarrow NH_3 + H_2O \qquad (IV)$$

Im sekundären Kompartiment 14 bilden Oxonium-Kation $H_3O^+$ mit den dort kumulierten Sulfat-Anionen Schwefelsäure $H_2SO_4$ und Wasser $H_2O$ gemäß Gleichgewichtsreaktion (V):

$$2\ H_3O^+ + SO_4^{2-} \leftrightarrow H_2SO_4 + 2\ H_2O \qquad (V)$$

Die Schwefelsäure wird in dem Wasser dissoziieren, so wie es ihre Natur ist.

**Versuche**

Die mit der Erfindung erzielten Effekte sollen nun experimentell untersucht werden. In dem Zusammenhang werden weitere Details des erfindungsgemäßen Verfahrens offenbart.

Versuchsaufbau und Durchführung

Material

In den Versuchen wurden die Membranen wie in Tabelle 2 aufgeführt eingesetzt. Vor Einbau wurden die Membranen für mindestens 24 h in 10 g/L Ammoniumsulfat (Carl Roth GmbH + Co. KG, >=99,5%, p.a.) eingelegt.

Tabelle 2: Membrantypen

| Hersteller | Bezeichnung | Membrantyp |
|---|---|---|
| Fuji | Typ II | AEM |
| Ralex | AMHPP | AEM |
| Ralex | BM 3.1 | BPM |

Die Elektrolytlösungen wurden jeweils mit Ammoniumsulfat (Carl Roth GmbH + Co. KG, >=99,5%, p.a.) und Natriumsulfat (Merck KGaA, Supelco, EMSURE) mit VE-Wasser angesetzt.

Versuchsaufbau

Herzstück des Versuchsaufbaus ist der Zellstack, wie in Figur 9 dargestellt, im Inneren der elektrochemischen Zelle. Dieser besteht aus Anionenaustauschermembranen (AEM), welche nur Anionen (hier Sulfat- und/oder Hydroxidionen) und ungeladene Stoffe (hier Wasser und ungelöstes Ammoniak) passieren lassen, und bipolaren Membranen (BPM), in welchen Wasser zu $OH^-$ und $H_3O^+$ dissoziiert und welche nur ungeladene Stoffe passieren können. Diese Membranen werden alternierend (im Beispiel AEM, BPM, AEM, BPM, AEM) angeordnet und trennen so einen basischen und einen sauren Kreislauf. Zwischen den Membranen und zwischen den äußersten Membranen und den Elektrodenkammer werden Spacer (Deukum GmbH), welche mit einem Dichtungsrand versehen sind, eingebaut. Die Kombination aus einer BPM und einer AEM wir hier Wiederholeinheit genannt. In den beiden äußeren Kammern befinden sich die Elektroden an denen Wasser zu $H_2$ bzw. Oz gespalten wird. Durch diese Elektrodenkammern fließt die Elektrodenspüllösung, welche Leitfähigkeit bereitstellt und das entstehende Gas abtransportiert. Im basischen Kreislauf entsteht hier der gelöste Ammoniak und im sauren Kreislauf entsteht Schwefelsäure.

Im Gesamtkontext umfasst der Versuchsaufbau, wie in Figur 5 dargestellt, die Elektrodialysezelle (ED-Zelle, 17,5 x 17,5 cm² aktive Membranfläche, Deukum GmbH), die Vorlagebehälter mit jeweils einer Pumpe (Verder Deutschland GmbH & Co. KG, V-MD20C-H für Feed und Säure, V-MD10 für die Elektrodenspüllösung) und einen Air-stripper. Der Air-stripper soll hierbei den entstehenden Ammoniak über einen Luftstrom aus dem basischen Elektrolyten austreiben.

In Figur 5 nicht abgebildet ist der eingesetzte Gleichrichter (FuG Elektronik GmbH, 0-150 V bei 0-30 A), welcher die ED-Zelle mit Strom versorgt.

Versuchsdurchführung

Um Ammoniak aus Abwasser mit hohen Konzentrationen an Ammoniumsulfat zu gewinnen, werden benötigt: eine Elektrodialysezelle bestückt mit Membranen in der Abfolge bipolare Membran (BPM) - Anionenaustauschermembran (AEM) - BPM. Über Silikonschläuche ist die Zelle mit drei Vorlagebehältern für den Feed, die Säure und die Elektrodenspülung verbunden. Drei Pumpen fördern die Lösungen in drei Kreisläufen durch die Zelle. Im Feed befinden sich 0-350 g/L Ammoniumsulfat, im Säurebehälter und der Elektrodenspülung je 0-50 g/L. Im Feedkreislauf nach der Elektrodialysezelle befindet sich ein Air Stripper, über den das gebildete Ammoniak abgetrennt wird. Über Ventile nach der Zelle und dem Air Stripper können in der Feed and Bleed-Fahrweise aus den Kreisläufen Flüssigkeit entnommen werden.

Die Versuche wurden in zwei unterschiedlichen Modi durchgeführt. Einmal im so genannten 'Batch'-Modus und einmal im ‚Semi-Batch'-Modus, welcher gleichzeitig einen ‚Feed-and-Bleed'-Modus mit verlängerter Verweilzeit simuliert.

Der ‚Batch'-Modus wird folgendermaßen erzielt:

    1. Befüllen der Vorlagebehälter

2. Zirkulieren der Flüssigkeiten und Austreiben der Luft aus Kammer und Schläuchen

3. Anlegen von Spannung an die Elektrodialysezelle

4. Fahren der Ammoniumabreicherung bis zu Feedleitfähigkeit unter ca. 10 mS/cm

Danach ist der Versuch beendet und die Vorlagebehälter werden entleert und gespült. Während der Versuche werden regelmäßig Proben für die Ionenchromatographiemessungen entnommen und der pH-Wert und die Leitfähigkeit kontrolliert.

Die Verfahrensschritte des ‚Semi-Batch'-Modus beinhalten:

1. Befüllen der Vorlagebehälter

2. Zirkulieren der Flüssigkeiten und Austreiben der Luft aus Kammer und Schläuchen

3. Anlegen von Spannung an die Elektrodialysezelle

4. Fahren der Ammoniumabreicherung bis zu Feedleitfähigkeit unter ca. 10 mS/cm

5. Entfernen von Teil des Feeds (Bleedmodus)

6. Zugabe von frischem Feed

7. Wiederholung von Schritt 4 bis 6, bis gewünschte Feedlösung aufgereinigt ist.

Auch hier werden wie oben beschrieben Proben entnommen und Messungen durchgeführt.

Ionenchromatographiemessungen der Ammoniumkonzentration

Zur Bestimmung der Ammoniumkonzentrationen in den Proben wurde ein Ionenchromatograph der Firma Metrohm eingesetzt. Bei diesem Messverfahren wird eine flüssige Probe in einen Eluenten eingebracht und über eine Säule mit Ionenaustauscherharzbeschichtung geleitet. Durch die Wechselwirkung von Ionenaustauscherharz mit den Ionen in der Lösung, wird die Probe in ihre einzelnen Fraktionen aufgetrennt und dann mit einem Leitfähigkeitsdetektor quantifiziert.

Die Proben müssen hierbei ungefähr auf einen pH-Wert von 2 eingestellt werden, um eine nachhaltige Zerstörung der Ionenaustauscherharzbeschichtung zu verhindern. Dadurch wird das in den Feedproben gelöste Ammoniak wieder in Ammonium umgewandelt. Es wird also immer die Ammoniumgesamtkonzentration gemessen. Aus den aufgenommen pH-Werten während der Versuche kann dann wieder auf die gelöst-Ammoniakkonzentration mit Gleichung 5 zurückgerechnet werden:

$$c_{Ammonium,gemessen}/(1 + 10\text{^}(9,5 - pH_{Probe,Versuch})) \qquad \text{(Gl. 5)}$$

Dabei ist 9,5 der pKs-Wert einer Ammonium/Ammoniak-Lösung bei 20°C.

Versuchseraebnisse und Diskussion

Zur Überprüfung der industriellen Umsetzbarkeit des Prozesses wurden Laborversuche mit unterschiedlichen Stackzusammensetzungen, Startmedien und -konzentrationen, Stromdichten und Membranen durchgeführt. Hierbei war der Beweis der generellen Machbarkeit vorrangig und zusätzlich wurde die ökonomischen Machbarkeit abgeschätzt. Unterstützend wurde ein Modell in Python genutzt, um verschiedene Einflussfaktoren auf den Scale-up der Anlage zu simulieren und zu untersuchen.

Einfluss auf die Machbarkeit des Prozesses hat unter anderem der Wassertransport zwischen den Kreisläufen. So ist ein möglichst ausgeglichener Wasserhaushalt und nur ein Wasserelektrolysebedingtest Defizit in der Elektrodenspüllösung anzustreben. Der Wassertransport wird maßgeblich von den eingesetzten Membranen, der Stromdichte und den vorliegenden Konzentrationen bestimmt. Des Weiteren muss das gelöste Ammoniumsulfat in einer möglichst kurzen Verweilzeit umgesetzt werden und das entstehende Ammoniak zu einem möglichst geringen Teil in die nicht-Ziel Kreisläufe diffundieren. Diese Diffusion wird von der Verweilzeit und den Membraneigenschaften beeinflusst.

Einfluss der Auswahl der AEM

Im Vergleich zweier Batch-Experimente mit gleichen Versuchsbedingungen, aber unterschiedlichen AEM Membranen ist zu aller erst ein deutlich unterschiedlicher Verlauf der Vorlagebehälterfüllstände zu sehen.

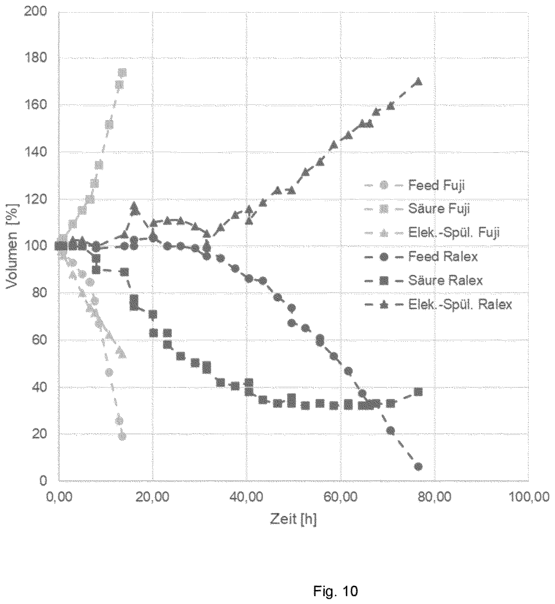

Figur 10 stellt den Verlauf der Füllstände über die Versuchszeit von mehreren Tagen in einem Versuch mit Fuji AEMs und BPMs dem bei einem Versuch mit Ralex AEMs und BPMs entgegen.

Fig. 10: Vergleich der prozentualen Volumenänderung in 'Batch'-Versuchen mit Fuji gegenüber Ralex AEMs mit jeweils zwei Wiederholeinheiten.

Die Versuche wurden bei 590 A/m$^2$ durchgeführt. Als Startkonzentrationen wurden eingesetzt: Im Feed 350 g/L Ammoniumsulfat, in der Säure 0,5 g/L und in der Elektrodenspüllösung 100 g/L Natriumsulfat.

In beiden Versuchen wurde eine Spannung von 18A (588 A/m$^2$) angelegt und der Feed mit 350g/L Ammoniumsulfat, die Säure mit 0,5g/L und die Elektrodenspüllösung mit 100g/L Natriumsulfat befüllt. Die Volumina wurden dabei auf das Anfangsvolumen (100 %) normiert und zwischenzeitliches Nachfüllen von VE-Wasser oder Ablassen eines Teils der Lösung herausgerechnet.

Figur 10 zeigt den Versuch mit Fuji Membranen wo ein sofortiger Anstieg des Säurevorlagenbehältervolumens von 100% auf 174% innerhalb von 14 h zu sehen ist. Nach der Versuchszeit von 6,75 h wurde der Versuch über Nacht abgeschaltet und es ist ein darauffolgender leichter Anstieg der Steigung zu verzeichnen. Die Füllstände des Feeds und der Elektrodenspüllösung verhalten sich im selben Zeitraum gegenteilig zur Säure. Das Feedvolumen sinkt auf 19% und verzeichnet ebenfalls eine Steigungserhöhung und das Elektrodenspüllösungsvolumen sinkt ohne Steigungsänderung auf 54%.

Im Versuch mit Ralex Membranen verlaufen alle Füllstände bis zu einer Zeit von ca. 8 h (ein Versuchstag) relativ konstant. Danach sinkt der Säurefüllstand auf ein Minimum von 32% zwischen 52,5 h und 66 h und steigt danach wieder auf 38% bei 76,5h. Der Feedfüllstand verläuft weiterhin ca. konstant bis er ab ca. 31,5 h stetig auf 6% bei 76,5 h abfällt. Der Elektrodenspülungsfüllstand fängt, nach einem lokalen Maximum von 118% bei 16 h, zur circa gleichen Zeit wie der Feed an stetig auf 170% bei 76,5 h anzusteigen.

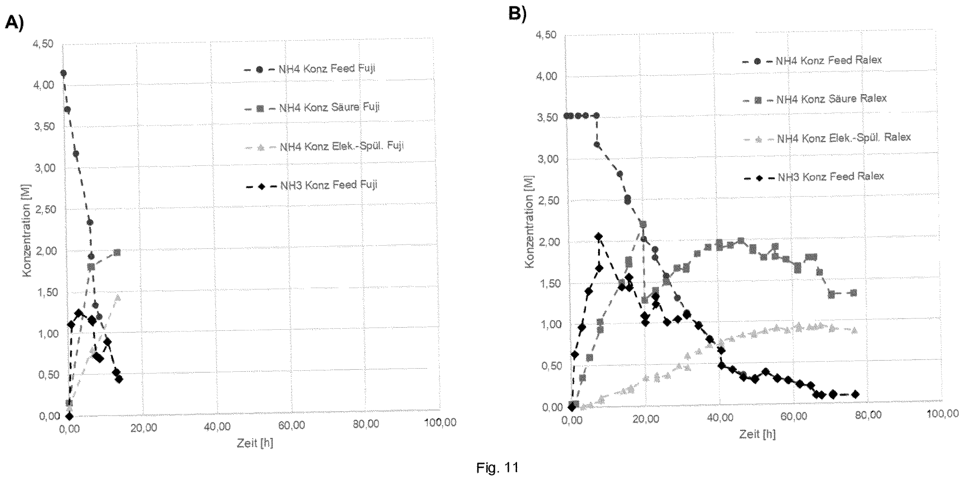

Im Vergleich der Konzentrationsverläufe in Figur 11 lassen sich ebenfalls Unterschiede erkennen.

Fig. 11: Vergleich der Ammonium- und Ammoniakkonzentrationen in 'Batch'-Versuchen mit Fuji gegnüber Ralex AEM mit jeweils zwei Wiederholeinheiten.

Die in Figur 11 dargestellten Versuche wurden bei 590 A/m$^2$ durchgeführt. Als Startkonzentrationen wurden eingesetzt: im Feed 350g/L Ammoniumsulfat, in der Säure 0,5g/L und in der Elektrodenspüllösung 100g/L Natriumsulfat.

Beide Versuche starten bei einer Ammoniumkonzentration von ca. 4 mol/L im Feed, welche durch die Verdünnung mit dem im Totvolumen des Aufbaus verbleibenden Wasser niedriger ist als die zu erwartenden 5,30 mol/L einer 35 wt.% Lösung. Die gemessene Ammoniumkonzentration bildet dabei messungsbedingt, wie in der IC-Messmethodik beschrieben, die Gesamtmenge von Ammonium und Ammoniak ab.

Bei den Fuji Membranen (Graphik A in Figur 11) fällt diese Konzentration innerhalb von 14 h auf 0,44 mol/L ab bei gleichzeitigem Anstieg der Ammoniumkonzentrationen in der Säure auf 1,97 mol/L und in der Elektrodenspüllösung auf 1,43 mol/L. Aus dem ebenfalls aufgezeichneten pH-Verlauf lässt sich über die Henderson-Hasselbalch-Gleichung die, im Feed vorliegende, gelöst-Ammoniakkonzentration errechnen. Diese startet bei 0 mol/l, erreicht bei 3 h ein Maximum von 1,42 mol/L und überlappt danach ab ca. 10,75 h mit der Gesamtammoniumkonzentration. Letzteres bedeutet, dass alles Ammonium als Ammoniak vorliegt.

Im Versuch mit den Ralex Membranen (Graphik B in Figur 11) fällt die Feedkonzentration ebenfalls ab und erreicht innerhalb von 40,5h einen Wert von 0,47 mol/L danach fällt die Konzentration langsamer auf 0,1 mol/L nach 76,5h. Ebenfalls erreichen die Ammoniumkonzentrationen in den anderen Vorlagebehältern lokale Maxima: In der Säure von 2,2 mol/L nach 20 h und in der Elektrodenspüllösung von 0,94 mol/L nach 67,5 h. Das im Feed gelöste Ammoniak startet bei 0 mol/L, erreicht bei 8 h ein Maximum von 2,06 mol/L, fällt danach ab und überlappt ab 31,5 h mit der Gesamtammoniumkonzentration.

Der Versuch mit den Fuji Membranen zeigt den deutlich geringeren Rückhalt der Membranen für Wasser, welches durch die hohe Stromdichte mit den Hydrathüllen der Ammoniumionen transportiert wird. Diesem Strom wäre anfangs ein Wasserstrom entgegengerichtet, welcher durch den hohen osmotischen Druckunterschied von den Kammern mit niedrigerer Konzentration (Säure) zu denen mit höherer Konzentration (Feed) entsteht. Dessen Einfluss ist in diesem Versuch aber nicht zu erkennen. Der stetige Volumenverlust der Elektrodenspüllösung ist bei einem solchen Prozess zu erwarten, da in den Elektrodenkammern stetig Wasser zu $H_2$ und $O_2$ umgesetzt wird. Des Weiteren zeigen die Membranen auch einen im Vergleich geringeren Rückhalt für Ammoniumionen bzw. gelöstes Ammoniak. Der schnellere Anstieg der Ammoniumkonzentration in Säure und Elektrodenspüllösung belegt diese Durchlässigkeit. Vermutlich diffundiert das gelöste und ungeladene Ammoniak nahezu ungehindert durch die Membranen. Dieser Umstand macht eine möglichst kurze Verweilzeit und niedrige Ammoniakkonzentrationen, von diesen Faktoren hängt die Menge des diffundierten Ammoniaks ab, erstrebenswert.

Im Gegensatz dazu zeigen die Ralex-Membranen einen wesentlich höheren Widerstand für Wassertransport sowohl durch den hohen Ionenstrom als auch durch den osmotischen Druckunterschied. Dies ist daran zu erkennen, dass sich die Volumina anfangs kaum verändern. Ab ca. 8h findet ein, auf Grund des hohen Konzentrationsgradienten, osmotischer Druckgetriebener Wassertransport von der Säure in die Elektrodenspüllösung statt. Dies ist ebenfalls ein Indiz dafür, dass die hohe Konzentration der Elektrodenspüllösung aufrecht erhalten wird. Der abrupt einsetzende Volumenverlust in der Feedlösung stimmt außerdem zeitlich mit der vollständigen Umwandlung des Ammoniums zum Ammoniak überein. Auch hier lässt sich der selbe Schluss bezüglich der Verweilzeit und der Ammoniakkonzentration ziehen.

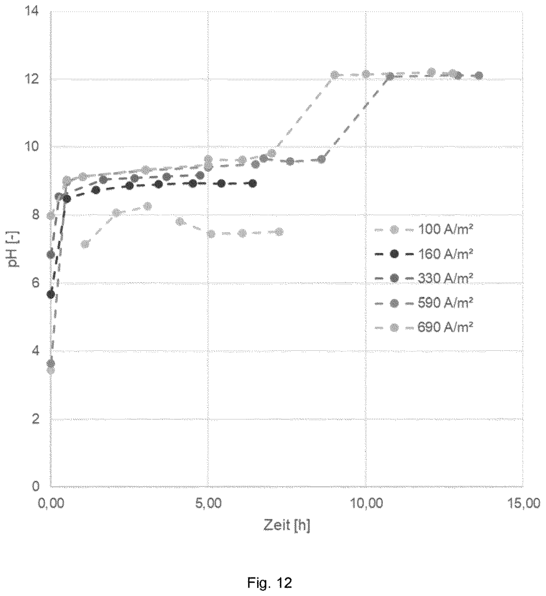

In einem Versuch mit Fuji Membranen bei einer fixen, zwischen den Versuchen variierten Spannung zwischen 3A (100 A/m$^2$) und 18A (590 A/m$^2$) wurde die Entwicklung der Feed pH-Werte vermessen, siehe Graphik in Figur 12.

Fig. 12: Vergleich der pH-Wertentwicklung in 'Batch'-Versuchen mit Fuji AEMs mit jeweils zwei Wiederholeinheiten.

Als Startkonzentrationen wurden eingesetzt: im Feed 350g/L Ammoniumsulfat, in der Säure 0,5g/L und in der Elektrodenspüllösung 100g/L Natriumsulfat.

Der Versuch bei 100 A/m$^2$ zeigt einen Anstieg des pH-Wertes auf ein Maximum von 8,25 nach ca. 3h, sinkt danach auf 7,44 bei ca. 7 h und verzeichnet danach nur noch einen leichten Anstieg auf 7,51 bei 7,25 h. Die Versuche mit höheren Stromdichten zeigen grundlegend andere Verläufe. Hier steigt der pH-Wert schnell, innerhalb von ca. 30min an und zeigt dann nur geringe Änderungen. Bei 160 A/m$^2$ läuft der pH-Wert so gegen 8,93 bei ca. 6,5h; bei 330 A/m$^2$ gegen 9,17 bei 4,75h; bei 590 A/m$^2$ gegen 9,64 bei ca. 8,6 h; und bei 690 A/m$^2$ gegen 9,81 bei 7 h. In den letzten beiden Fällen findet danach noch ein rapider, sprunghafter Anstieg des pH-Wertes statt, welcher danach ungefähr konstant bleibt. Bei 590 A/m$^2$ auf ca. 12,1 ab 10,75 h und bei 690 A/m$^2$ auf ca. 12,2 ab 9 h.

Aus diesen Versuchen lässt sich ableiten, dass eine höhere Stromdichte auch einen höheren pH-Wert vor kompletter Ammoniumumwandlung bedeutet. Zudem lässt sich der pH-Sprung in den beiden Versuchen mit den höchsten Stromdichten als der Zeitpunkt der kompletten Ammoniumumwandlung interpretieren und würden sicherlich auch nach genügender Zeit in den anderen Versuchen stattfinden. Allerdings streben wir auf Grund des vorherig beschriebenen Ammoniakverlustes eine möglichst kurze Verweilzeit und somit hohe Stromdichten an. Die aufgezeichneten Sprünge finden zwar deutlich nach den aus dem Faradaygesetz errechneten Zeitpunkten (ca. 4 h für 590 A/m$^2$ und ca. 3,2 h für 690 A/m$^2$) statt, aber diese Effizienz der Umwandlung kann durch prozesstechnische Anpassungen und einen Scale-up, wie später beschrieben, noch deutlich angehoben werden.

Verhalten im Semi-Batch und Einfluss der Membrananzahl

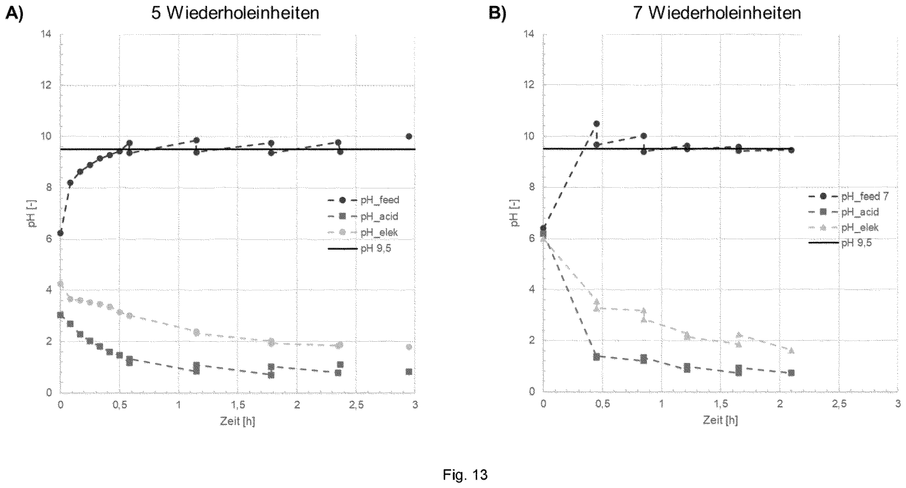

Für einen Scale-up werden weitere Daten und ein möglichst kontinuierlicher Betrieb benötigt. Aus diesem Grund wurden weitere Versuche, wie in Figur 13 dargestellt, im Semi-Batch Betrieb durchgeführt.

Fig. 13: Vergleich der pH-Wertentwicklung zwischen fünf gegenüber sieben Wiederholeinheiten aus Ralex AEMs und BPMs in 'Semi-Batch' Versuchen.

Die Versuche wurden bei 590 A/m$^2$ durchgeführt und bei einer Leitfähigkeitsunterschreitung im Feed von 10 mS/cm wurde ein Teil der Lösung gegen frischen Feed ausgetauscht. Als Startkonzentrationen wurden eingesetzt: im Feed 50g/L in der Säure und in der Elektrodenspüllösung jeweils 30g/L Ammoniumsulfat.

Außerdem wurden die vorgelegten Konzentrationen angepasst, um einen Betrieb im Feed-and-Bleed Modus zu simulieren, bei welchem die Ammonium-reiche Feedlösung kontinuierlich verdünnt wird und in allen Kreisläufen auf Ammoniumsulfat umgestellt. Gleichzeitig wurde die Anzahl der Wiederholeinheiten auf 5 bzw. 7 erhöht, um den Einfluss der Elektrodenspüllösung zu minimieren.

Die Startkonzentrationen lagen bei den hier gezeigten Versuchen im Feed bei 50 g/L und in der Säure und der Elektrodenspüllösung bei jeweils 30 g/L. Beide Versuche wurden bei 590 A/m$^2$ (18 A) betrieben. Die Versuche wurden jeweils so lange gefahren bis die Leitfähigkeit im Feed 10 mS/cm unterschritten hat. Dann wurde ein Teil der Lösung ausgetauscht.

Der Verlauf der pH-Werte ist bei beiden Versuchen grundsätzlich ähnlich. Im Feed steigt der pH-Wert innerhalb von ca. 30min auf 9,75 (5 Wiederholeinheiten, Graphik A in Figur 13) bzw. 10,5 (7 Wiederholeinheiten, Graphik B in Figur 13) an. Danach wird der pH Wert durch ständiges Austauchen von 250mL (ca. 16%) der Feedlösung mit 350g/L Ammoniumsulfatlösung, wenn eine Leitfähigkeitsschwelle als Indikator für die Umwandlung von Ammonium unterschritten wurde, zwischen A) 9,36 und 10,0 bzw. B) zwischen 9,39 und 10 gehalten. Die pH-Werte der Säure und der Elektrodenspüllösung fallen erst auf ca. A) 1,17 und 3,0 bzw. B) 3,55 und 1,34 innerhalb von ca. 30min ab und sinken dann weiter bis auf ca. A) 0,69 und 1,78 bzw. B) 0,73 und 1,86.

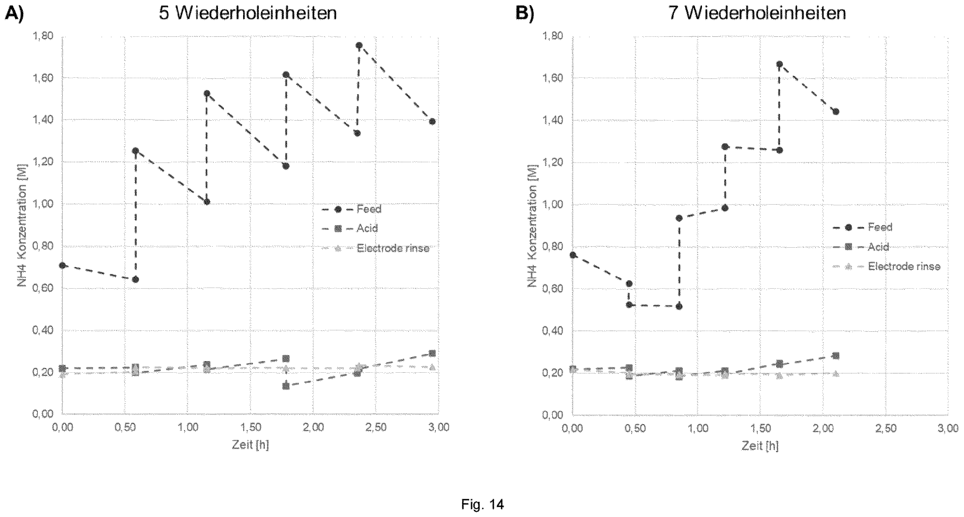

Die Ammoniumkonzentrationen im Verlauf sind in Figur 14 dargestellt.

Fig. 14: Vergleich der Ammoniumkonzentrationen zwischen 5 gegenüber 7 Wiederholeinheiten aus Ralex AEMs und BPMs in 'Semi-Batch' Versuchen.

Die Ammoniumkonzentrationen (Figur 14) zeigen in A) und B) jeweils steigende Verläufe im Feed. Hier wechseln sich Phasen der Umwandlung und austragen des Ammoniaks in die Abluft über den Air-stripper mit dem definierten Austausch eines Teiles der Feedlösung ab.

Im Versuch mit fünf Wiederholeinheiten (Graphik A in Figur 14) startet die Feedkonzentration bei 0,71 mol/L fällt nach 0,58 h auf 0,6 mol/L und steigt beim darauffolgenden Austausch auf 1,28 mol/L. Der darauffolgende Abfall ist stärker ausgeprägt. Hier fällt die Konzentration auf 1,01 mol/L bei 1,15 h und wird danach auf 1,53 mol/L angehoben. Dieses Verhalten wiederholt sich danach bis die Konzentration final auf 1,39 mol/L nach 2,95 h abfällt. Die Intervalle zwischen Auffüllen und Abbruch liegen dabei immer bei ca. 35,4 min. Die Konzentrationen in der Säure und in der Elektrodenspüllösung bleiben größtenteils bei ca. 0,2 mol/L konstant. Nur die Konzentration in der Säure fällt erwähnenswert bei 1,78 h auf 0,13 mol/L ab und steigt danach auf 0,29 mol/L bei 2,95 h.

Ein ähnliches Verhalten ist bei sieben Wiederholeinheiten (Graphik B in Figur 14) zu erkennen. Im Feed fällt die Konzentration von 0,76 mol/L auf 0,63 mol/L nach 0,46 h ab. Danach sorgte eine Verwechslung (es wurde mit Wasser anstatt mit 350 g/L Ammoniumsulfatlösung ausgetauscht) für einen Abfall auf 0,58 mol/L. Im nachfolgenden Zyklus wurde dir Konzentration aber wieder auf 0,94 mol/L nach 0,85 h erhöht. Diese stieg im Verlauf leicht auf 0,98 mol/L nach 1,22 h. Darauffolgend erhöhte sich die Konzentration durch Austausch und Prozessieren auf 1,44 mol/L nach dem letzten Abfall bei 2,1 h. Die durchschnittliche Zeit zwischen den Intervallen betrug ca. 25,2 min. Auch in diesem Versuch blieben die Säure- und Elektrodenspüllösungskonzentrationen bei ca. 0,2 mol/L konstant wobei die Konzentration in der Säure ab 1,22 h auf 0,28 mol/l bei 2,1 h anstieg.

Als wichtiger Parameter für die Machbarkeit eines kontinuierlichen Prozesses wurde ebenfalls die Volumenänderung beobachtet.

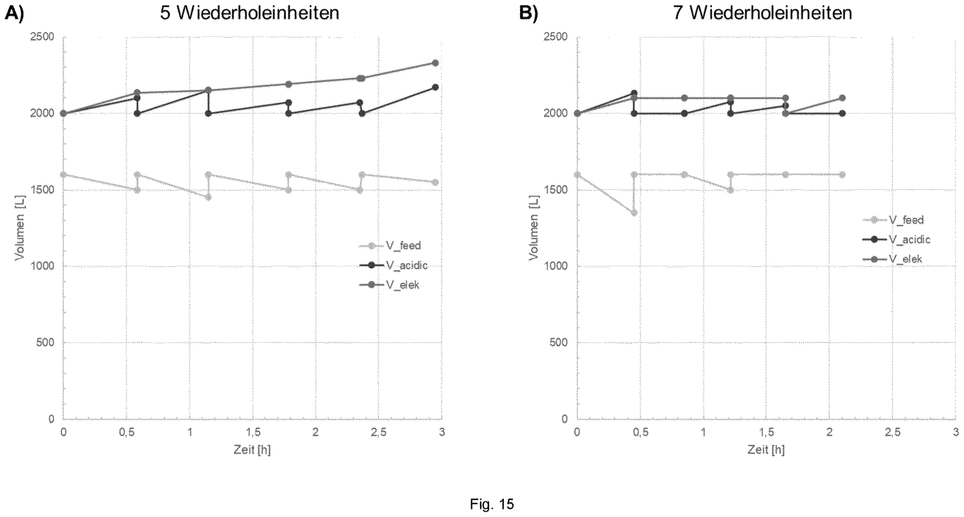

Fig. 15: Vergleich der Volumenentwicklung zwischen fünf gegenüber sieben Wiederholeinheiten aus Ralex AEMs und BPMs in ‚Semi-Batch' Versuchen.

In beiden Versuchen, wie in Figur 15 dargestellt, startete der Feed bei 1600 mL und die beiden anderen Lösungen bei jeweils 2000 mL. Der Feed wurde nach jedem wie vorab beschriebenen Zyklus auf das Ausgangsvolumen aufgefüllt und die Säure wurde bei Volumenanstieg auf den Ausgangswert abgelassen. Im Versuch mit fünf Widerholeinheiten (Graphik A in Figur 15) erkennt man ein deutliches Absinken des Feedvolumens auf ca. 1500 mL in jedem Zyklus. Die Säure steig dabei jeweils auf ca. 2100 mL an. Die Elektrodenspüllösung steigt kontinuierlich auf 2330 mL nach 2,95 h an.

Im Versuch mit sieben Widerholeinheiten (Graphik B in Fig. 15) ist zuerst ein stärkerer Abfall des Feedvolumens auf 1350 mL erkennbar wonach das Volumen aber fast dauerhaft auf 1600 mL verbleibt. Das heißt es musste auch nicht wieder aufgefüllt werden. In der Säure steigt das Volumen zuerst auf 2130 mL und verbleibt danach bis auf zwei geringere Anstiege auf ca. 2000 mL. Die Elektrodenspüllösung steigt zuerst auf 2100 mL und verbleibt dann größtenteils bei diesem Volumen.

In diesen Versuchen zeigt sich zu allererst, dass mehr Membranen eine schnellere Umwandlung bedeuten. Dies liegt daran, dass in der selben Verweilzeit bei der gleichen Stromdichte mit einer höheren Membrananzahl mehr Ionen transportiert werden. Dem gegenübergestellt ist ein steigender Widerstand und somit höherer Spannungsbedarf. Hier wird auch der geringere Einfluss der Elektrodenspüllösung deutlich, was sich in einem proportional geringeren Widerstand zeigt.

In der Betrachtung der $NH_4$-Konzentrationen und Volumina erkennt man zum Einen, dass die Anpassung der Startkonzentrationen bewirkt, dass kaum noch Änderungen in der Säure und der Elektrodenspüllösung stattfinden. Besonders deutlich ist dies bei mehr Wiederholeinheiten zu erkennen. Im Feed ändern sich die Volumina auch nur wenig, allerdings ist ein Anstieg der Ammoniumkonzentration zu verzeichnen. Dies ist dadurch zu erklären, dass der eingesetzte Laboraufbau zum Strippen des Ammoniaks eine nicht ausreichende Leistung liefert und das Ammoniak mit den Durchläufen akkumuliert. Im industriellen Maßstab ist daher die Anlage mit einem ausreichend dimensionierten, kommerziellen Stripper auszustatten.

Modellvorhersage für weitere Betriebsmodi

Für eine im Feed-and-Bleed Betrieb gefahrene Pilotanlage wurde zusätzlich ein Simulationsmodell basierend auf einer Widerstandsabschätzung des Membranstapels und der Faradaygleichung geschrieben. Dafür wurde zusätzlich die Ausgangsammoniumkonzentration geschätzt und ein ideales Membranverhalten angenommen.

Figur 7 zeigt eine Skizze eines solchen Aufbaus. Das Pilot-Modul hat eine größere aktive Membranfläche pro Membran und wird in diesem Beispiel mit mehr Widerholeinheiten betrieben.

Mit idealen Annahmen wurde dabei die, mit den Ralex Membranen erreichbaren, niedrigsten Energiekosten für das Produzierte Ammoniak (ohne Peripheriekosten) zu 6,5 kWh/kgNH$_3$ berechnet. Diese Energiekosten sind vergleichbar mit Literaturwerten (3,9 kWh/kgNH$_3$, van Linden et al. 2019), welche unter Laborbedingungen in kleinen Maßstab gewonnen wurden. Es ist daher zu erwarten, dass eine noch größere Produktionsanlage weitere Energieeinsparungen ermöglicht.

Fazit

Durch die Verwendung von lediglich zwei Membranen (BPM und AEM), statt drei Membranen (mit zusätzlicher CEM) besteht im Laufe der Elektrodialyse ein geringerer Konzentrationsunterschied zwischen den Kreisläufen. Dies verringert störenden Wasserübergang. Dieser Effekt verbessert sich außerdem durch eine größere Anzahl an Wiederholeinheiten.

Die Feed and Bleed-Fahrweise hat ähnliche Vorteile: der Konzentrationsgradient zwischen den Kompartimenten ist geringer als bei der konventionellen Single-Pass-Fahrweise. Dadurch wird der Ammoniakverlust durch die Membranen und der Wasserübergang reduziert.

Die Simulation eines ‚Feed-and-Bleed'-Pilotbetriebes zeigt vielversprechende Energiekosten für die Rückgewinnung von Ammoniak. Ein entsprechender Prozess erscheint auch im industriellen Maßstab rentabel.

**Bezugszeichenliste**

| | |
|---|---|
| 0 | elektrochemische Zelle |
| 1 | anodische Elektrodenkammer |
| 2 | kathodische Elektrodenkammer |
| 3 | Anode |
| 4 | Kathode |
| 5 | Stack |
| 6 | anodische Endmembran |
| 7 | kathodische Endmembran |
| 8 | positiv geladene Ionenaustauschermembran |
| 9 | negativ geladene Ionenaustauschermembran |
| 10 | erste elektrische Leitung |
| 11 | zweite elektrische Leitung |
| 12 | Spannungsquelle |
| 13 | primäres Kompartiment |
| 14 | sekundäres Kompartiment |
| 15 | Separator |
| 16 | Ammoniumsulfat-reiches Wasser |
| 17 | Ammoniakwasser |
| 18 | saurer Elektrolyt |
| 19 | wässrigen Schwefelsäure |
| 20 | Elektrodenspüllösung |
| 21 | Tank für Elektrodenspüllösung |
| 22 | Stripper |
| 23 | Strippgas |
| 24 | Ammoniak-armes Wasser |
| 25 | primärer Vorlagebehälter |
| 26 | sekundärer Vorlagebehälter |
| 27 | frisches Ammoniumsulfat-reiches Wasser |
| 28 | frisches Wasser |
| | |
| AEM | Anionenaustauschermembran |
| CEM | Kationenaustauschermembran |
| BPM | bipolare Membran |
| (+) | Pluspol |
| (-) | Minuspol |
| R | Wiederholeinheit |
| n | Anzahl der Wiederholeinheiten |
| s | Anzahl der Separatoren |
| k | Anzahl der Kompartimente |
| a | Anzahl der als AEM ausgeführten Separatoren |
| b | Anzahl der als BPM ausgeführten Separatoren |

| | |
|---|---|
| $N_2$ | Stickstoff |
| $H_2$ | Wasserstoff |
| Oz | Sauerstoff |
| $NH_3$ | Ammoniak |
| $H_2SO_4$ | Schwefelsäure |
| $H_2O$ | Wasser |
| $(NH_4)_2SO_4$ | Ammoniumsulfat |
| $NH4^+$ | Ammonium-Kation |
| $SO_4^{2-}$ | Sulfat-Anion |
| $OH^-$ | Hydroxid-Anion |
| $H_3O^+$ | Oxonium-Kation |

**Patentansprüche**

1. Verfahren zur Herstellung von Ammoniak und wässriger Schwefelsäure aus Ammoniumsulfat-reichen Wässern mit den folgenden, nicht chronologischen Schritten:

a) Bereitstellen von mindestens einer elektrochemischen Zelle mit den folgenden Merkmalen:

i) die elektrochemische Zelle umfasst eine anodische Elektrodenkammer, in der eine Anode angeordnet ist;
ii) die elektrochemische Zelle umfasst eine kathodische Elektrodenkammer, in der eine Kathode angeordnet ist;
iii) die elektrochemische Zelle umfasst einen Stack mit dem folgenden Aufbau:

• der Stack weist eine Anzahl $n$ Wiederholeinheiten auf, wobei es sich bei $n$ um eine natürliche Zahl handelt;
• der Stack weist eine Anzahl $n$ primäre Kompartimente auf;
• der Stack weist eine Anzahl $n$ sekundäre Kompartimente auf;
• der Stack weist eine Anzahl s Separatoren auf, wobei sich s wie folgt berechnet: s = $2*n-1$;
• die primären und sekundären Kompartimente sind alternierend in dem Stack angeordnet und jeweils durch einen Separator voneinander getrennt;
• bei jedem Separator handelt es sich entweder um eine Anionen leitende Membran oder um eine bipolare Membran;
• die Anzahl a der Separatoren, bei denen es sich um eine Anionen leitende Membran handelt, bestimmt sich wie folgt:
a=1 wenn n=1 und a = n-1 wenn $n$ > 1;
• die Anzahl b der Separatoren, bei denen es sich um eine bipolare Membran handelt, bestimmt sich wie folgt:
b=0 wenn n=1 und b = $n$ wenn $n$ > 1;
• wenn n > 1 sind die Separatoren, bei denen es sich um eine Anionen leitende Membran handelt und die Separatoren, bei denen es sich um eine bipolare Membran handelt, alternierend innerhalb des Stacks angeordnet;
• jedes primäres Kompartiment ist anodenseitig einer benachbarten bipolaren Membran angeordnet, wobei die benachbarte bipolare Membran nicht Bestandteil des Stacks sein muss;
• jedes sekundäres Kompartiment ist kathodenseitig einer benachbarten bipolaren Membran angeordnet, wobei die benachbarte bipolare Membran nicht Bestandteil des Stacks sein muss;

iv) die elektrochemische Zelle umfasst zwei Endmembranen, wobei die erste Endmembran zwischen dem Stack und anodischen Elektrodenkammer angeordnet ist, wobei die zweite Endmembran zwischen dem Stack und der kathodischen Elektrodenkammer angeordnet ist, und wobei beide Endmembranen identisch ausgewählt sind aus der Gruppe bestehend aus den folgenden Membrantypen: Anionen leitende Membran, Kationen leitende Membranen, bipolare Membran;
vii) jede bipolare Membran ist jeweils so in der elektrochemischen Zelle angeordnet, dass ihr positiv geladener Teil in Richtung der Anode orientiert ist, währenddessen ihr negativ geladener Teil in Richtung der Kathode orientiert ist;

b) Bereitstellen einer elektrischen Spannungsquelle;

c) Bereitstellen eines Ammoniumsulfat-reichen Wassers enthaltend Wasser und Ammoniumsulfat;

d) Bereitstellen eines sauren Elektrolyts enthaltend Wasser und Schwefelsäure;

e) Bereitstellen einer Elektrodenspüllösung enthaltend Wasser, Schwefelsäure und/oder Ammoniumsulfat;

f) Beaufschlagen der primären Kompartimente der elektrochemischen Zelle mit dem Ammoniumsulfat-reichen Wasser;

g) Beaufschlagen der sekundären Kompartimente der elektrochemischen Zelle mit dem sauren Elektrolyt;

h) Spülen der Elektrodenkammern mit Elektrodenspüllösung;

i) Beaufschlagen der elektrochemischen Zelle mit einer von der elektrischen Spannungsquelle bezogenen elektrischen Spannung, dergestalt, dass zwischen der Anode und der Kathode ein elektrisches Potential herrscht;

j) Abführen von Ammoniakwasser aus den primären Kompartimenten der elektrochemischen Zelle;

k) Abführen von wässriger Schwefelsäure aus den sekundären Kompartimenten der elektrochemischen Zelle;

l) Abtrennen von Ammoniak aus dem Ammoniakwasser wobei ein Ammoniak-armes Wasser erhalten wird.

2. Verfahren nach Anspruch 1, **dadurch gekennzeichnet, dass** die elektrochemische Zelle genau eine anodische Elektrodenkammer, genau eine kathodische Elektrodenkammer, genau einen Stack und genau zwei Endmembranen aufweist, und dass die erste Endmembran unmittelbar an Stack und anodischer Elektrodenkamme angrenzt und dass die zweite Endmembran unmittelbar an Stack und kathodischer Elektrodenkammer angrenzt.

3. Verfahren nach Anspruch 1 oder 2, **dadurch gekennzeichnet, dass** der Stack aus den in Anspruch 1 aufgezählten Kompartimenten und Separatoren besteht.

4. Verfahren nach Anspruch 1, 2 oder 3, **dadurch gekennzeichnet, dass** mindestens ein Kompartiment und/oder mindestens eine Elektrodenkammer von einem Spacer aufgespannt wird.

5. Verfahren nach einem der Ansprüche 1 bis 4, durchgeführt in einer Anlage umfassend eine Vielzahl elektrochemischer Zellen, die parallel mit der elektrischen Spannungsquelle verschaltet sind.

6. Verfahren nach einem der Ansprüche 1 bis 5, **dadurch gekennzeichnet, dass** der Ammoniak durch Strippen mit Luft oder Stickstoff aus dem Ammoniakwasser abgetrennt wird.

7. Verfahren nach einem der Ansprüche 1 bis 6, **dadurch gekennzeichnet, dass** der Ammoniak bei einem Druck zwischen 0 hPa und 1013 hPa aus dem Ammoniakwasser abgetrennt wird.

8. Verfahren nach einem der Ansprüche 1 bis 7, durchgeführt in einem Betriebsmodus, der ausgewählt ist aus der Gruppe der folgenden Betriebsmodi: batch, semi-batch, feed-and-bleed, single-pass.

9. Verfahren nach Anspruch 8, durchgeführt in dem Betriebsmodus batch, **dadurch gekennzeichnet, dass** das Ammoniumsulfat-reiche Wasser in einem primären Vorlagebehälter bereit gestellt wird, und dass das Ammoniak-arme Wasser in den primären Vorlagebehälter verbracht wird;

und/oder dass der saure Elektrolyt in einem sekundären Vorlagebehälter bereit gestellt wird, und dass die wässrige Schwefelsäure in den sekundären Vorlagebehälter verbracht wird.

10. Verfahren nach Anspruch 8, durchgeführt in dem Betriebsmodus semi-batch,

**dadurch gekennzeichnet, dass** das Ammoniumsulfat-reiche Wasser in einem primären Vorlagebehälter bereit gestellt wird, dass das Ammoniak-arme Wasser in den primären Vorlagebehälter verbracht wird, und dass zeitweise ein Teil des Inhalts des primären Vorlagebehälters entnommen und mit frischem Ammoniumsulfat-reichen Wasser ersetzt wird;

und/oder dass der saure Elektrolyt in einem sekundären Vorlagebehälter bereit gestellt wird, dass die wässrige Schwefelsäure in den sekundären Vorlagebehälter verbracht wird, und dass zeitweise ein Teil des Inhalts des sekundären Vorlagebehälters entnommen und mit frischem sauren Elektrolyt oder Wasser ersetzt wird.

11. Verfahren nach Anspruch 8, durchgeführt in dem Betriebsmodus feed-and-bleed,

**dadurch gekennzeichnet, dass** das Ammoniumsulfat-reiche Wasser in einem primären Vorlagebehälter bereit gestellt wird, dass das Ammoniak-arme Wasser in den primären Vorlagebehälter verbracht wird, und dass kontinuierlich ein Teil des Inhalts des primären Vorlagebehälters entnommen und mit frischem Ammoniumsulfat-reichen Wasser ersetzt wird;
und/oder dass kontinuierlich ein Teil des Ammoniak-armen Wassers vor Verbringung in den primären Vorlagebehälter entnommen und mit frischem Ammoniumsulfat-reichen Wasser ersetzt wird;
und/oder dass der saure Elektrolyt in einem sekundären Vorlagebehälter bereit gestellt wird, dass die wässrige Schwefelsäure in den sekundären Vorlagebehälter verbracht wird, und dass kontinuierlich ein Teil des Inhalts des sekundären Vorlagebehälters entnommen und mit frischem sauren Elektrolyt oder Wasser ersetzt wird und/oder dass kontinuierlich ein Teil der wässrigen Schwefelsäure vor Verbringung in den primären Vorlagebehälter entnommen und mit frischem sauren Elektrolyt oder Wasser ersetzt wird.

12. Verfahren nach Anspruch 8, durchgeführt in dem Betriebsmodus single-pass,
**dadurch gekennzeichnet, dass** kontinuierlich frisches Ammoniumsulfat-reiches Wasser bereit gestellt und kontinuierlich Ammoniak-armes Wasser ausgeschleust wird; und/oder dass kontinuierlich frischer saurer Elektrolyt bereit gestellt und kontinuierlich wässrige Schwefelsäure ausgeschleust wird.

13. Verfahren nach einem der Ansprüche 10, 11 oder 12, **dadurch gekennzeichnet, dass** das frische Ammoniumsulfat reiche Wasser Ammoniumsulfat in einer Konzentration zwischen 30 und 40 Gew.-% enthält, bezogen auf die Masse des frischen Ammoniumsulfat-reichen Wassers, wobei der per Glaselektrode bei 20°C gemessene pH-Wert des frischen Ammoniumsulfat-reichen Wassers zwischen 5 und 9 liegt.

14. Verfahren nach einem der Ansprüche 1 bis 13, **dadurch gekennzeichnet, dass** die Elektrodenspüllösung in einem Spültank bereitgestellt wird, und dass die Elektrodenspüllösung kontinuierlich aus dem Spültank in die beiden Elektrodenkammern und von dort wieder zurück in den Spültank zirkuliert wird.

15. Verfahren nach Anspruch 14, **dadurch gekennzeichnet, dass** die Elektrodenspüllösung nacheinander durch die eine Elektrodenkammer und danach durch die andere Elektrodenkammer geführt wird.

16. Verfahren nach Anspruch 14 oder 15, **dadurch gekennzeichnet, dass** die Elektrodenspüllösung hinsichtlich ihres pH-Wertes kontinuierlich überwacht wird, wobei im Falle einer Überschreitung eines Soll-pH-Wertes Wasser und/oder Schwefelsäure bzw. im Falle einer Unterschreitung eines Soll-pH-Wertes Wasser und/oder Ammoniumsulfat zudosiert wird.

17. Verfahren nach einem der Ansprüche 14 bis 16, **dadurch gekennzeichnet, dass** der Spültank hinsichtlich seines Füllstandes kontinuierlich überwacht wird, wobei im Falle einer Überschreitung eines Soll-Füllstandes Elektrolytspüllösung abgelassen bzw. im Falle einer Unterschreitung eines Soll-Füllstandes Wasser und/oder Schwefelsäure und/oder Ammoniumsulfat zudosiert wird.

18. Verfahren nach einem der Ansprüche 8, 10 oder 11, **dadurch gekennzeichnet, dass** mindestens ein Vorlagebehälter hinsichtlich seines Füllstandes kontinuierlich überwacht wird, wobei im Falle einer Überschreitung eines Soll-Füllstandes Ammoniumsulfat-reiches Wasser bzw. saurer Elektrolyt abgelassen bzw. im Falle einer Unterschreitung eines Soll-Füllstandes Wasser und/oder Schwefelsäure und/oder Ammoniumsulfat zudosiert wird.

Fig. 1

8

9

+

−

BPM

Fig. 2

14   15= AEM   13

+   -

8|9

5

R   n=1

Fig. 3.

Fig. 3.2

Fig. 3.3

EP 4 442 354 A1

Fig. 4

EP 4 442 354 A1

Fig. 5

Fig. 6

Fig. 7

Fig. 8

Fig. 9

Fig. 10

Fig. 11

Fig. 12

Fig. 13

EP 4 442 354 A1

**A)** 5 Wiederholeinheiten

**B)** 7 Wiederholeinheiten

Fig. 14

Fig. 15

Europäisches Patentamt
European Patent Office
Office européen des brevets

# EUROPÄISCHER RECHERCHENBERICHT

**Nummer der Anmeldung**

EP 23 16 6752

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZHANG XIAOYAN ET AL: "Sulfuric Acid and Ammonia Generation by Bipolar Membranes Electrodialysis: Transport Rate Model for Ion and Water through Anion Exchange Membrane", CHEMICAL AND BIOCHEMICAL ENGINEERING QUARTERLY., Bd. 22, Nr. 1, 2008, Seiten 1-8, XP093063664, CR ISSN: 0352-9568 * Seite 1 – Seite 2 * ----- | 1-18 | INV. B01D61/42 C02F1/469 ADD. C02F1/20 |
| X,D | LV YAN ET AL: "Bipolar membrane electrodialysis for the recycling of ammonium chloride wastewater: Membrane selection and process optimization", CHEMICAL ENGINEERING RESEARCH AND DESIGN, ELSEVIER, AMSTERDAM, NL, Bd. 138, 17. August 2018 (2018-08-17), Seiten 105-115, XP085502017, ISSN: 0263-8762, DOI: 10.1016/J.CHERD.2018.08.014 * Seite 106 – Seite 107 * ----- | 1-18 | |
| X | YEON K-H ET AL: "Production of Sulfuric Acid and Ammonia Water from Ammonium Sulfate Using Electrodialysis with Bipolar Membrane and Ammonia Stripping", KOREAN MEMBRANE JOURNAL, HAN'GUK-MAGHAKHOE, KI, Bd. 7, Nr. 1, Dezember 2005 (2005-12), Seiten 28-33, XP008122668, ISSN: 1229-6791 * Seite 28 – Seite 30 * ----- | 1-18 | |

**RECHERCHIERTE SACHGEBIETE (IPC)**

B01D
C02F

Der vorliegende Recherchenbericht wurde für alle Patentansprüche erstellt

| Recherchenort | Abschlußdatum der Recherche | Prüfer |
|---|---|---|
| Den Haag | 13. Juli 2023 | Châtellier, Xavier |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 104445755 B
- JP 2011224445 A
- CN 102515317 A
- US 20210069645 A
- DE 2727409 C2

**In der Beschreibung aufgeführte Nicht-Patentliteratur**

- Ammonium Compounds. Section 2: Ammonium Sulfate. **ZAPP, K.-H. ; WOSTBROCK, K.-H. ; SCHÄFER, M. ; SATO, K. ; SEITER, H. ; ZWICK, W. ; CREUTZIGER, R. ; LEITER, H.** Ullmann's Encyclopedia of Industrial Chemistry. 2000
- Membrane Technology. Section 7.5 Electrodialysis. **VAN DER BRUGGEN, B.** Kirk-Othmer Encyclopedia of Chemical Technology. John Wiley & Sons, Inc, 2017
- **GAIN, E. ; LABORIE, S. ; VIERS, P. et al.** Ammonium nitrate wastewater treatment by coupled membrane electrolysis and electrodialysis. *Journal of Applied Electrochemistry,* 2002, vol. 32, 969-975
- **YAN LV ; HAIYANG YAN ; BAOJUN YANG ; CUIMING WU ; XU ZHANG ; XIAOLIN WANG.** Bipolar membrane electrodialysis for the recycling of ammonium chloride wastewater: Membrane selection and process optimization. *Chemical Engineering Research and Design,* 2018, vol. 138, ISSN 0263-8762, 105-115
- **YA LI ; SHAOYUAN SHI ; HONGBIN CAO ; XINMIN WU ; ZHIJUAN ZHAO ; LIYING WANG.** Bipolar membrane electrodialysis for generation of hydrochloric acid and ammonia from simulated ammonium chloride wastewater. *Water Research,* 2016, vol. 89, ISSN 0043-1354, 201-209
- **YANG, H. ; ZHANG, X.-.-S. ; YUAN, W.-.-K.** Effect ofOperating Parameters on the Condensation of Ammonium Sulfate by Electrodialysis. *Chem. Eng. Technol.,* 2008, vol. 31, 1261-1264, https://doi.org/10.1002/ceat.200700461
- **LUO MINGRUI ; ZHANG ZEQIANG ; ZHANG HANQUAN ; LI DONGLIAN ; HE DONGSHENG.** Influence factors of decomposing ammonium sulfate by bipolar membrane electrodialysis. *Chemical Minerals and Processing,* 2015, vol. 44 (11
- **GAO LI-HUA.** Study on Sulfuric acid Production from Ammonium sulfate by Bipolar Membrane Electrodialysis. *HEBEi HUAGONG,* Juni 2012, vol. 35 (6
- **NIELS VAN LINDEN ; HENRI SPANJERS ; JULES B. VAN LIER.** Application of dynamic current density for increased concentration factors and reduced energy consumption for concentrating ammonium by electrodialysis. *Water Research,* 2019, vol. 163, ISSN 0043-1354, 114856